(19)

Europäisches
Patentamt

European
Patent Office

Office européen
des brevets

(11) **EP 4 368 675 A1**

(12) **EUROPEAN PATENT APPLICATION**
published in accordance with Art. 153(4) EPC

(43) Date of publication:
**15.05.2024  Bulletin 2024/20**

(21) Application number: **22837741.2**

(22) Date of filing: **07.07.2022**

(51) International Patent Classification (IPC):
**C08L 101/00** (2006.01)     **C08K 3/22** (2006.01)
**C08K 7/02** (2006.01)       **C08L 23/00** (2006.01)
**C08L 23/02** (2006.01)

(52) Cooperative Patent Classification (CPC):
**C08K 3/22; C08K 7/02; C08L 23/00; C08L 23/02;
C08L 101/00**

(86) International application number:
**PCT/JP2022/026977**

(87) International publication number:
**WO 2023/282327 (12.01.2023 Gazette 2023/02)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **09.07.2021  JP 2021114570
18.03.2022  JP 2022044487**

(71) Applicant: **Mitsui Chemicals, Inc.
Tokyo 104-0028 (JP)**

(72) Inventors:
• **SAITO Susumu
  Sodegaura-shi, Chiba 299-0265 (JP)**
• **SAHARA Kenichi
  Sodegaura-shi, Chiba 299-0265 (JP)**

(74) Representative: **J A Kemp LLP
80 Turnmill Street
London EC1M 5QU (GB)**

(54) **THERMOPLASTIC RESIN COMPOSITION AND USE THEREOF**

(57)    An object of the present invention is to obtain a thermoplastic resin composition that is suitable for obtaining a molded article that does not produce increased hydrophilic properties, and that has a hard feel and a texture closer to that of earthenware.

The thermoplastic resin composition of the present invention is characterized in that it contains 10 to 50 parts by mass of a thermoplastic resin (A), 50 to 90 parts by mass of a metal oxide (B) [provided that the total amount of (A)+(B) is 100 parts by mass], and an unmodified polyolefin-based wax (C) in a range of 0.1 to 20 parts by mass per 100 parts by mass of the total amount of (A)+(B).

EP 4 368 675 A1

**Description**

TECHNICAL FIELD

The present invention relates to a thermoplastic resin composition containing a metal oxide and a use thereof.

BACKGROUND ART

Thermoplastic resins such as polyolefins and ABS resins are molded by various methods and used in many fields. On the other hand, polyolefins such as polypropylene have inferior mechanical properties such as heat resistance, rigidity, and tensile strength compared to engineering plastics such as polyamide and polycarbonate, and therefore inorganic fillers such as talc, and heat-resistant fibers such as glass fibers and carbon fibers are added as reinforcements depending on the use.

For example, Patent Literature 1 proposes a polyolefin composition containing a large amount of 20 to 80 parts by weight of inorganic filler composed of an inorganic compound.

On the other hand, the kneadability with polyolefins was found to be inferior when inorganic compounds such as metal oxides are contained in large quantities, and to improve the kneadability, for example, Patent Literature 2 proposes to add 0.1 to 20 parts by mass of a modified polyolefin-based wax to a composition containing 10 to 50 parts by mass of a thermoplastic resin and 50 to 90 parts by mass of a metal oxide.

CITATION LIST

PATENT LITERATURE

Patent Literature 1: JP S52(1977)-15542A
Patent Literature 2: WO2017/209215

SUMMARY OF INVENTION

TECHNICAL PROBLEM

However, it was found that with thermoplastic resin compositions obtained by adding modified polyolefin-based waxes, the hydroxyl group density on the surface of the resulting molded article tends to be relatively high, which increases hydrophilicity and gives it a moist texture, and that under certain conditions (such as acid solutions), inorganic compounds may elute, causing a loss of texture.

An object of the present invention is to obtain a thermoplastic resin composition that is suitable for obtaining a molded article that does not produce increased hydrophilic properties (has a low water absorption rate), and that has a hard feel and a texture closer to that of earthenware.

SOLUTION TO PROBLEM

The present invention relates to, for example, the following items [1] to [20].

In the present specification, the term "polymer" includes both homopolymer and copolymer unless otherwise specified.

[1] A thermoplastic resin composition containing 10 to 50 parts by mass of a thermoplastic resin (A), 50 to 90 parts by mass of a metal oxide (B), provided that a total amount of (A)+(B) is 100 parts by mass, and an unmodified polyolefin-based wax (C) in a range of 0.1 to 20 parts by mass per 100 parts by mass of the total amount of (A)+(B).

[2] The thermoplastic resin composition according to [1], wherein the thermoplastic resin (A) is one or more selected from the group consisting of ethylene-based polymers, propylene-based polymers, 1-butene-based polymers, 4-methyl-1-pentene-based polymers, and ABS resins.

[3] The thermoplastic resin composition according to [1] or [2], wherein the metal oxide (B) includes magnesium oxide.

[4] The thermoplastic resin composition according to any of [1] to [3], wherein an average particle size of the metal oxide (B) is in a range of 0.1 to 110 $\mu$m.

[5] The thermoplastic resin composition according to any of [1] to [4], wherein a thermal conductivity of the metal oxide (B) is in a range of 10 to 300 W/mK.

[6] The thermoplastic resin composition according to any of [1] to [5], wherein a thermal conductivity of the thermoplastic resin composition is in a range of 0.5 to 5 W/mK.

[7] The thermoplastic resin composition according to any of [1] to [6], wherein a specific gravity of the thermoplastic resin composition is in a range of 1.0 to 5.0.

[8] The thermoplastic resin composition according to any of [1] to [7], containing 10 to 30 parts by mass of the thermoplastic resin (A) and 70 to 90 parts by mass of the metal oxide (B), provided that the total amount of (A)+(B) is 100 parts by mass.

[9] The thermoplastic resin composition according to any of [1] to [8], wherein an antibacterial activity value after 24 hours is 2.0 or more in an antibacterial test performed using Escherichia coli in accordance with JIS Z 2801:2012 (film adhesion method) under conditions where no water or light resistance pretreatment is performed.

[10] The thermoplastic resin composition according to any of [1] to [9], wherein an antibacterial activity value after 24 hours is 2.0 or more in an antibacterial test performed using Staphylococcus aureus in accordance with JIS Z 2801:2012 (film adhesion method) under conditions where no water or light resistance pretreatment is performed.

[11] The thermoplastic resin composition according to any of [1] to [10], wherein an antiviral activity value is 2.0 or more in an antiviral test performed using Feline calicivirus conducted in accordance with ISO 21702:2019.

[12] The thermoplastic resin composition according to any of [1] to [11], containing a fibrous filler (D) in a range of 0.1 to 20 parts by mass per 100 parts by mass in total of the thermoplastic resin (A) and the metal oxide (B).

[13] A molded article containing the thermoplastic resin composition according to any of [1] to [12].

[14] A door handle, door knob, handrail or switch containing the thermoplastic resin composition according to any of [1] to [12] .

[15] A case containing the thermoplastic resin composition according to any of [1] to [12].

[16] A fashion accessory containing the thermoplastic resin composition according to any of [1] to [12].

[17] A container containing the thermoplastic resin composition according to any of [1] to [12].

[18] Stationery containing the thermoplastic resin composition according to any of [1] to [12].

[19] Tableware or alcoholic drink ware containing the thermoplastic resin composition according to any of [1] to [12]

[20] A mouse or keyboard containing the thermoplastic resin composition according to any of [1] to [12].

ADVANTAGEOUS EFFECTS OF INVENTION

The thermoplastic resin composition of the present invention has an extremely low water absorption rate and a thermal conductivity equivalent to that of earthenware, and is therefore suitable for obtaining a molded article that has a cool feel, as well as a hard feel and a texture closer to that of earthenware. On the other hand, since the present product has antibacterial properties due to the effect of the metal oxide contained therein, it is suitable for obtaining a molded article for uses where the texture can be felt by direct touch.

DESCRIPTION OF EMBODIMENTS

Hereinafter, the present invention will be specifically described.

<Thermoplastic resin (A)>

For example, olefin-based polymers, ABS resins, styrene-based resins, and polyesters can be used as the thermoplastic resin (A), which is one of the components in the thermoplastic resin composition of the present invention.

Olefin-based polymers are homopolymers of $\alpha$-olefins (including ethylene) such as ethylene, propylene, 1-butene, and 4-methyl-1-pentene, copolymers of the $\alpha$-olefins and other $\alpha$-olefins, and copolymers of the $\alpha$-olefins and monomers other than $\alpha$-olefins, where $\alpha$-olefin is the main component.

Specific examples of the thermoplastic resin (A) according to the present invention includes the following polymers.

<Ethylene-based polymer (A1)>

The ethylene-based polymer (A1) according to the present invention is a homopolymer of ethylene, or a copolymer of ethylene and an $\alpha$-olefin having 3 to 20 carbon atoms, and usually includes polymers containing structural units derived from ethylene as the main component, which are referred to as high density polyethylene (HDPE), medium density polyethylene (MDPE), low density polyethylene (LDPE), linear low density polyethylene (LLDPE), and ethylene-$\alpha$-olefin copolymer. Specific examples of the $\alpha$-olefins having 3 to 20 carbon atoms to be copolymerized with ethylene include propylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, 2-methyl-1-butene, 3-methyl-1-butene, 3,3-dimethyl-1-butene, and 3,5,5-trimethyl-1-hexene. Of these, $\alpha$-olefins having 3 to 10 carbon atoms are preferred, $\alpha$-olefins having 3 to 8 carbon atoms are more preferred, and particularly, ethylene, 1-butene, 1-hexene, 4-methyl-1-pentene, and 1-octene are even more preferred. The molar ratio of ethylene to $\alpha$-olefin (ethylene/$\alpha$-olefin) is preferably 99/1 to 60/40, more preferably 95/5 to 70/30, and even more preferably 90/10 to 60/25.

Suitable specific examples of ethylene-$\alpha$-olefin copolymers include ethylene-propylene copolymer, ethylene-1-butene copolymer, ethylene-1-hexene copolymer, ethylene-4-methyl-1-pentene copolymer, ethylene-1-octene copolymer, ethylene-propylene-1-butene copolymer, and ethylene-propylene-1-octene copolymer. Of these, ethylene-propylene copolymer, ethylene-1-butene copolymer, ethylene-1-hexene copolymer, ethylene-4-methyl-1-pentene copolymer, and ethylene-1-octene copolymer are preferred, and ethylene-1-butene copolymer is more preferred.

The density (measured according to JIS K7112) of the ethylene-based polymer (A1) is preferably 850 to 980 kg/m$^3$, more preferably 855 to 978 kg/m$^3$, even more preferably 860 to 976 kg/m$^3$, and particularly preferably 862 to 973 kg/m$^3$.

When the thermoplastic resin composition of the present invention contains the ethylene-based polymer (A1), the molded article obtained from the thermoplastic resin composition tends to have a higher thermal conductivity than when it contains the propylene-based polymer (A2) described below, have excellent warm-cold sensation, and produce a high sound when tapped. Such molded article can be suitably used for various applications without any limitation, but can be suitably used, for example, as a base material to modify metal-evaporated surfaces.

<Propylene-based polymer (A2)>

The propylene-based polymer (A2) according to the present invention is a polymer containing structural units derived from propylene as the main component, such as a homopolymer of propylene (propylene homopolymer: homo PP), a copolymer of propylene and ethylene and/or an $\alpha$-olefin having 4 to 20 carbon atoms (random copolymer: random PP), and a composition of a homopolymer of propylene and an ethylene-propylene copolymer (block copolymer: block PP). Specific examples of the $\alpha$-olefin in the propylene-$\alpha$-olefin copolymer include ethylene, 1-butene, 1-pentene, 1-hexene, 4-methyl-1-pentene, 1-octene, 1-decene, 1-dodecene, 1-tetradecene, 1-hexadecene, 1-octadecene, 1-eicosene, 2-methyl-1-butene, 3-methyl-1-butene, 3,3-dimethyl-1-butene, 3-methyl-1-hexene, and 3,5,5-trimethyl-1-hexene. Of these, ethylene and $\alpha$-olefins having 4 to 10 carbon atoms are preferred, ethylene and $\alpha$-olefins having 4 to 8 carbon atoms are more preferred, and particularly, ethylene, 1-butene, 1-hexene, 4-methyl-1-pentene, and 1-octene are even more preferred. The molar ratio of propylene to $\alpha$-olefin (propylene/$\alpha$-olefin) is preferably 99/1 to 60/40, more preferably 95/5 to 70/30, and even more preferably 90/10 to 70/30.

Suitable specific examples of propylene-$\alpha$-olefin copolymers (random PP) include propylene-ethylene copolymer, propylene-1-butene copolymer, propylene-1-hexene copolymer, propylene-4-methyl-1-pentene copolymer, propylene-1-octene copolymer, and propylene-ethylene-1-butene copolymer. Of these, propylene-ethylene copolymer and propylene-1-butene copolymer are preferred, and propylene-ethylene copolymer is particularly preferred.

In the case of a propylene homopolymer, the preferred melting point is 155 to 170°C, more preferably 158 to 165°C.

In the case of a propylene-ethylene random copolymer, the ethylene content of the propylene-ethylene random copolymer is preferably 1.9 to 5.4% by mass, more preferably 2.0 to 4.8% by mass. The crystalline melting point of the propylene-ethylene random copolymer, as measured by a differential scanning calorimeter (DSC) in accordance with JIS K7121, is preferably usually 130 to 150°C, more preferably 130 to 145°C, and particularly preferably 135 to 145°C.

The density (measured according to JIS K7112) of the propylene-based polymer (A2) is preferably 850 to 910 kg/m$^3$, more preferably 875 to 909 kg/m$^3$, and more preferably 890 to 908 kg/m$^3$.

As the propylene-based polymer (A2) according to the present invention, a propylene-based polymer containing a fibrous filler (D) such as glass fibers as described below can be used, and in this case, the density (measured according to JIS K7112) of the propylene-based polymer containing the fibrous filler (D) is preferably 910 to 1220 kg/m$^3$, more preferably 940 to 1200 kg/m$^3$, even more preferably 970 to 1160 kg/m$^3$, and particularly preferably 1000 to 1120 kg/m$^3$.

The propylene-ethylene block copolymer and the propylene-ethylene random copolymer may be used singly, or two or more copolymers in mixture may be used. For example, two or more copolymers can be mixed for MFR adjustment.

When the thermoplastic resin composition of the present invention contains the propylene-based polymer (A2), the molded article obtained from the thermoplastic resin composition can be suitably used for various applications without any limitation. While it has a thermal conductivity close to that of earthenware and a specific gravity equivalent to that of earthenware, it does not break like earthenware upon impact such as from falling, making it highly safe, and therefore can be suitably used for applications that are touched by hand, for example, tableware such as cups, containers, and door handles.

<1-Butene-based polymer (A3)>

The 1-butene-based polymer (A3) according to the present invention is a polymer containing structural units derived from 1-butene as the main component, such as a homopolymer of 1-butene (polybutene) and copolymers of 1-butene with ethylene, propylene, and α-olefins having 5 to 20 carbon atoms (1-butene-α-olefin copolymers).

<4-Methyl-1-pentene-based polymer (A4)>

The 4-methyl-1-pentene-based polymer (A4) according to the present invention is a polymer containing structural units derived from 4-methyl-1-pentene as the main component, such as a homopolymer of 4-methyl-1-pentene and copolymers of 4-methyl-1-pentene and α-olefins having 2 to 20 carbon atoms (excluding 4-methyl-1-pentene) (4-methyl-1-pentene-α-olefin copolymers).

Specific examples of the α-olefin in the 4-methyl-1-pentene-α-olefin copolymer include linear α-olefins having 2 to 20 carbon atoms (preferably 2 to 15 carbon atoms, more preferably 2 to 10 carbon atoms) such as ethylene, propylene, 1-butene, 1-pentene, 1-hexene, 1-octene, 1-decene, 1-undecene, 1-dodecene, 1-tetradecene, 1-hexadecene, 1-octadecene, and 1-eicosene; and branched α-olefins having 5 to 20 carbon atoms (preferably 5 to 15 carbon atoms) such as 3-methyl-1-butene, 3-methyl-1-pentene, 3-ethyl-1-pentene, 4,4-dimethyl-1-pentene, 4-methyl-1-hexene, 4,4-dimethyl-1-hexene, 4-ethyl-1-hexene, and 3-ethyl-1-hexene. Of these, ethylene, propylene, 1-butene, 1-pentene, 1-hexene and 1-octene are preferred, and ethylene and propylene are particularly preferred. The α-olefin may be derived from one of these compounds or from two or more.

The molar ratio of 4-methyl-1-pentene to α-olefin (4-methyl-1-pentene/α-olefin) is preferably 55/45 to 90/10, more preferably 60/40 to 86/14 and even more preferably 68/32 to 85/15.

In one embodiment, the 4-methyl-1-pentene-based polymer (A4) has a temperature at which the loss tangent (tan δ), obtained by dynamic viscoelastic measurement at a frequency of 10 rad/s (1.6 Hz), reaches its peak value within a temperature range of -40 to 150°C, is 0°C or more and 60°C or less, preferably 10°C or more and 50°C or less, more preferably 20°C or more and 45°C or less, and particularly preferably 25°C or more and 44°C or less.

In the 4-methyl-1-pentene-based polymer (A4), the peak value of the above tan δ is 0.6 or more and 5.0 or less. This peak value of tan δ is preferably 0.7 or more and 4.5 or less, and more preferably 0.8 or more and 3.5 or less.

Tan δ can be calculated as the ratio of the storage modulus (G') to the loss modulus (G") (G"/G': loss tangent) using the storage modulus (G') and loss modulus (G") obtained when measuring dynamic viscoelasticity.

In the present invention, the temperature at which tan δ reaches its peak value (maximum value) in the range of -40 to 150°C is defined as the temperature at which the above tan δ reaches its peak value (hereinafter referred to as "tan δ peak temperature"), and the value of tan δ at that time is defined as the peak value of the above tan δ (hereinafter referred to as "tan δ peak value"). The above peak is thought to be derived from the glass transition temperature of the 4-methyl-1-pentene-based polymer (A4).

In other aspects, the 4-methyl-1-pentene-based polymer (A4) has a tan δ peak temperature, obtained by dynamic viscoelastic measurement at a frequency of 10 rad/s (1.6 Hz) within a temperature range of -40 to 150°C, of preferably 15°C or more and 45°C or less. In terms of the lower limit of the tan δ peak temperature, the tan δ peak temperature is more preferably 20°C or more, and even more preferably 25°C or more. In an exemplary aspect of the present invention, the tan δ peak temperature is 40°C or less, but it may exceed 40°C as long as the object of the present invention can be achieved. In a typical aspect of the invention, the tan δ peak temperature is preferably 20°C or more and 45°C or less, and even more preferably 25°C or more and 43°C or less. By having a tan δ peak temperature within the above temperature range, the value of tan δ at room temperature can be further increased.

The 4-methyl-1-pentene-based polymer (A4) preferably has a tan δ peak value, obtained by dynamic viscoelastic measurement at a frequency of 10 rad/s (1.6 Hz) within a temperature range of -40 to 150°C, of 0.6 or more and 5.0 or less, more preferably 1.0 or more and 4.8 or less, even more preferably 1.3 or more and 4.5 or less, and particularly preferably 1.8 or more and 4.0 or less. By having a tan δ peak value within the above range, the vibration absorption, material hardness and followability can be varied depending on the rate of tension and deformation.

The 4-methyl-1-pentene-based polymer (A4) has a melting point (Tm), as measured by a differential scanning calorimeter (DSC), of preferably 160°C or less or not observed, more preferably 140°C or less or not observed, and even more preferably not observed. Meeting such requirements allows to improve the kneadability with inorganic materials in the resin composition of the present invention and to improve vibration absorption and stress relaxation properties.

The intrinsic viscosity [η] of the 4-methyl-1-pentene-based polymer (A4) measured in decalin at 135°C is preferably 0.1 dL/g or more and 5.0 dL/g or less, more preferably 0.5 dL/g or more and 4.0 dL/g or less, and even more preferably 0.5 dL/g or more and 3.5 dL/g or less. The 4-methyl-1-pentene-based polymer (A4) with the above intrinsic viscosity [η] within the above range allows to easily produce a molded article.

The above intrinsic viscosity [η] of the 4-methyl-1-pentene-based polymer (A4) can be adjusted to the above range by adding hydrogen during production by polymerization to control the molecular weight and polymerization activity.

The above intrinsic viscosity [η] can be obtained by determining the viscosity increase rate ηsp per unit concentration c (i.e., ηsp/c) of each polymer, when different amounts of the thermoplastic resin composition are dissolved in decalin at 135°C, to obtain the reduced viscosity ηred, and then extrapolating ηred so that the unit concentration c of the polymer is zero.

The ratio of the weight-average molecular weight (Mw) measured by gel permeation chromatography (GPC) to the number-average molecular weight (Mn) of the 4-methyl-1-pentene-based polymer (A4) (molecular weight distribution: Mw/Mn) is preferably 1.0 or more and 3.5 or less, more preferably 1.2 or more and 3.0 or less, and even more preferably 1.5 or more and 2.8 or less. The 4-methyl-1-pentene-based polymer (A4) with the above Mw/Mn in the above range is less susceptible to a loss of moldability caused by a low-molecular-weight and low-stereoregularity polymer, and is easy to mold.

In addition, the weight-average molecular weight (Mw) measured by gel permeation chromatography (GPC) of the 4-methyl-1-pentene-based polymer (A4) is preferably 500 or more and 10,000,000 or less, more preferably 1,000 or more and 5,000,000 or less, and even more preferably 1,000 or more and 2,500,000 or less, in terms of polystyrene.

The Mw/Mn and Mw of the 4-methyl-1-pentene-based polymer (A4) can be adjusted to the above ranges, for example, by using a metallocene catalyst.

The above Mw and Mw/Mn can be determined, for example, by analyzing the chromatograms obtained by measuring at a flow rate of 1.0 ml/min at 140°C using ALC/GPC 150-C plus type (integrated differential refractor detector) made by Waters as a liquid chromatograph, two GMH6-HTs and two GMH6-HTLs made by Tosoh Corporation connected in series as columns, and o-dichlorobenzene as a mobile phase medium, using a calibration curve using a standard polystyrene sample.

The density (measured according to JIS K7112) of the 4-methyl-1-pentene-based polymer (A4) is preferably 870 to 830 kg/m$^3$, more preferably 865 to 830 kg/m$^3$, and even more preferably 855 to 830 kg/m$^3$. Details such as measurement conditions are as described in the section of Examples described later.

The density can be appropriately varied according to the comonomer composition ratio of the 4-methyl-1-pentene-based polymer (A4), and a polymer (A4) whose density is within the above range is advantageous in producing a molded article.

When the thermoplastic resin composition of the present invention contains the 4-methyl-1-pentene-based polymer (A4), the molded article obtained from the thermoplastic resin composition can be suitably used for various applications without any limitation. Such a molded article has superior flexibility compared to when the propylene-based polymer (A2) is contained, and has properties such as easily bending when touched and retaining its shape at room temperature by imparting it heat conducting characteristics.

<ABS Resin (A5)>

The ABS resin (A5) according to the present invention is a resin that includes not only acrylonitrile-butadienestyrene copolymer, but also graft copolymers obtained by graft polymerization of a monomer containing aromatic vinyl or vinyl cyanide with a rubber component made from a monomer including butadiene, and copolymers produced from other monomers that can be copolymerized with aromatic vinyl or vinyl cyanide. Here, the rubber component is produced, for example, by a conventionally known solution polymerization method, bulk polymerization method, or emulsion polymerization method. The above graft polymers with this rubber or copolymers with this rubber that are produced by any of the conventionally known methods such as solution polymerization, bulk polymerization, and emulsion polymerization can be used, and are readily available in the market.

Specific examples of the ABS resin (A5) include commercial products such as KRALASTIC manufactured by NIPPON A&L INC., TECHNO ABS and UMG ABS manufactured by Techno-UMG Co., Ltd., TOYOLAC manufactured by Toray Industries, Inc. and Denka ABS manufactured by Denka Company Limited.

The density (measured in accordance with ISO 1183) of the ABS resin (A5) is preferably 1000 to 1070 kg/m$^3$, more preferably 1001 to 1060 kg/m$^3$, and more preferably 1002 to 1050 kg/m$^3$.

The ABS resin (A5) may be used singly, or two or more copolymers in mixture may be used. For example, two or more copolymers can be mixed for MFR adjustment.

When the thermoplastic resin composition of the present invention contains the ABS resin (A5), the molded article obtained from the thermoplastic resin composition can be suitably used for various applications without any limitation. In addition, it has superior impact resistance and tends to have a higher surface hardness compared to when the propylene-based polymer (A2) is contained, and therefore can be suitably used for applications such as trays, kitchen countertop surfaces, desks, bathroom counters where objects are expected to be rubbing against, and door handles that require strength.

<Other thermoplastic resin (A6)>

Examples of the thermoplastic resin (A6) other than (A1) to (A5) described above include styrene-based resins such as polystyrene, polyesters such as PET, polyamide, and acrylic-based resins. These other thermoplastic resins (A6) can be produced by known methods, or commercially available products thereof may be used. The other thermoplastic resins (A6) may be used singly or in combinations of two or more thereof.

Of these thermoplastic resins (A), the olefin-based polymers (A1) to (A4) and ABS resin (A5) are preferred, and the ethylene-based polymer (A1), propylene-based polymer (A2), 4-methyl-1-pentene-based polymer (A4) and ABS resin (A5) are more preferred. Two or more of the thermoplastic resins (A) may be used in combination.

The MFR (ASTM D1238, 230°C, 2.16 kg load) of the thermoplastic resin (A) is preferably 7 to 300 g/10 min. In terms of the lower limit of the MFR, it is preferably 11 g/10 min or more, more preferably 13 g/10 min or more, even more preferably 15 g/10 min or more, and particularly preferably 18 g/10 min or more. Moreover, in terms of the upper limit of the MFR, it is preferably 200 g/10 min or less, more preferably 150 g/10 min or less, and even more preferably 100 g/10 min or less.

A thermoplastic resin (A) with an MFR in the above range has good moldability such as injection moldability, and the resulting molded article has also good mechanical properties.

When the thermoplastic resin (A) is the 4-methyl-1-pentene-based polymer (A4), the upper limit of the MFR (ASTM D1238, 230°C, 2.16 kg load) is preferably 50 g/10 min or less, more preferably 30 g/10 min or less, even more preferably 15 g/10 min or less, and particularly preferably 13 g/10 min or less.

When the thermoplastic resin (A) is the ethylene-based polymer (A1), the MFR (ASTM D1238, 190°C, 2.16 kg load) is preferably 6 to 100 g/10 min. In terms of the lower limit of the MFR, it is preferably 8 g/10 min or more, more preferably 10 g/10 min or more, and even more preferably 11 g/10 min or more. Moreover, in terms of the upper limit of the MFR, it is preferably 80 g/10 min or less, more preferably 60 g/10 min or less, and even more preferably 50 g/10 min or less.

When the thermoplastic resin (A) is the ABS resin (A5), the MVR (ASTM D1133, 220°C, 10 kg load) is preferably 10 to 100 cm$^3$/10 min. In terms of the lower limit of the MVR, it is preferably 18 cm$^3$/10 min or more, more preferably 30 cm$^3$/10 min or more, and even more preferably 40 cm$^3$/10 min or more. Moreover, in terms of the upper limit of the MVR, it is preferably 95 cm$^3$/10 min or less, more preferably 90 cm$^3$/10 min or less, and even more preferably 85 cm$^3$/10 min or less.

<Metal oxide (B)>

The type of metal oxide (B), which is one of the components in the thermoplastic resin composition of the present invention, is not particularly limited as long as it is an oxide of a metal, but it should be a metal oxide having a higher thermal conductivity than the thermoplastic resin (A). For example, metal oxides such as magnesium oxide (45 to 60 W/mK), aluminum oxide (17 to 36.0 W/mK), zinc oxide (25 to 54 W/mK), and titanium oxide (8.4 W/mK) can be used. Two or more of metal oxides may be used in combination. The values in parentheses after the substance name indicate the value of the thermal conductivity at 300 K.

The metal oxide (B) according to the present invention is preferably a metal oxide having a thermal conductivity in the range of 10 to 300 W/mK. The lower limit of the thermal conductivity is more preferably 15 W/mK, even more preferably 20 W/mK, particularly preferably 30 W/mK, and most preferably 40 W/mK.

Moreover, the upper limit of the thermal conductivity is more preferably 250 W/mK, even more preferably 200 W/mK, and particularly preferably 100 W/mK.

Using a metal oxide (B) having a thermal conductivity in the above range allows the thermoplastic resin composition obtained by mixing the metal oxide (B) with the above thermoplastic resin (A) to have an appropriate thermal conductivity, and therefore to obtain a molded article such as a container that feels cool to the touch and warm when something hot is placed in it.

Unlike the case where titanium dioxide is used as a photocatalyst, the metal oxide (B) is preferably magnesium oxide or zinc oxide for applications where light irradiation is unnecessary and antibacterial and/or antiviral properties are required, and furthermore, more preferably magnesium oxide as it is white, easy to color, and low cost.

The shape of the metal oxide (B) according to the present invention can be, for example, spherical, cubic, plate-like, columnar, or hexagonal-plate-like, of which spherical is preferred. The metal oxide (B) can also be pulverized.

The metal oxide (B) according to the present invention preferably has an average particle size in the range of 0.1 to 110 μm. The lower limit of the average particle size is more preferably 0.2 μm, even more preferably 0.5 μm, and particularly preferably 1 μm.

Moreover, the upper limit of the average particle size is more preferably 105 μm, even more preferably 90 pm, and particularly preferably 85 μm.

If the average particle size is too small, it is more likely to aggregate, which may reduce handling properties and make it difficult to uniformly mix with the thermoplastic resin (A). On the other hand, if the average particle size is too large, the thermal conductivity of the resulting thermoplastic resin composition may become too low, and the mechanical properties of the resulting molded article may also decrease.

In applications where higher thermal conductivity is required, it is preferable to use, for example, a combination of a metal oxide (b1) and a metal oxide (b2) with different average particle sizes of 0.1 μm or more and less than 10 μm and 10 μm or more and 110 μm or less, respectively. In this case, the formulation ratio (mass ratio) is, for example, preferably (b1)/(b2) = 1/99 to 49/51, more preferably 5/95 to 45/55, and more preferably 10/90 to 40/60.

By using a combination of a metal oxide (b1) with a small average particle size and a metal oxide (b2) with a large average particle size, the metal oxide (b1) fills the gaps between the metal oxides (b2), increasing the packing density and thus improving the thermal conductivity of the resulting thermoplastic resin composition.

The aspect ratio of the metal oxide (B) is preferably small from the viewpoint of uniformity of heat conduction, for example. Specifically, the aspect ratio is preferably less than 1.2, more preferably less than 1.1.

The metal oxide (B) according to the present invention has preferably been subjected to a waterproof treatment. The metal oxide (B) is preferably substantially free of metal hydroxides, hydrates thereof and hydrates of metal oxides. Specifically, the content of metal hydroxides, hydrates thereof, and hydrates of metal oxides in 100% by mass of the total metal oxide (B) is preferably 1% by mass or less, more preferably 0.5% by mass or less, and particularly preferably 0.3% by mass or less.

<Unmodified Polyolefin-Based Wax (C)>

The unmodified polyolefin-based wax (C), which is one of the components in the thermoplastic resin composition of the present invention, is a low molecular weight polymer and is not particularly limited as long as it is an unmodified wax composed of a polyolefin such as polyethylene wax and polypropylene wax, and is preferably a polyethylene-based wax or a polypropylene-based wax, and is more preferably a polyethylene-based wax.

The unmodified polyolefin-based wax (C) according to the present invention has not been oxidized or modified with, for example, unsaturated carboxylic acids, and is unmodified.

The unmodified polyolefin-based wax (C) according to the present invention preferably has an acid value of 0.01 mg KOH/g or less, and more preferably 0 mg KOH/g, as measured in accordance with JIS K0070.

<Polyethylene-based wax>

The polyethylene-based wax used as the unmodified polyolefin-based wax (C) according to the present invention is a wax composed of, for example, a homopolymer of ethylene or a copolymer of ethylene and an α-olefin. As the α-olefin, α-olefins having 3 to 10 carbon atoms are preferred, α-olefins having 3 to 8 carbon atoms are more preferred, and 1-butene is even more preferred.

The polyethylene-based wax according to the present invention preferably has a density in the range of 890 to 980 kg/m$^3$, more preferably in the range of 895 to 975 kg/m$^3$, as measured in accordance with the density-gradient tube method of JIS K7112 (1999). When the density of the polyethylene-based wax is in such a range, the dispersibility of the polyethylene-based wax in the thermoplastic resin composition is improved.

The polyethylene-based wax according to the present invention preferably has a standard polyethylene-equivalent number-average molecular weight as measured by gel permeation chromatography of 700 to 4000, and more preferably 1500 to 3800.

A polyethylene-based wax with a number-average molecular weight (Mn) of 700 to 4000 can be appropriately dispersed by the thermoplastic resin (A) when molding the thermoplastic resin composition of the present invention, and also contribute to the dispersibility of the metal oxide (B). It can also reduce the extrusion load during molding extrusion. As a result, the productivity of the molded article can be further improved.

The polyethylene-based wax according to the present invention preferably has a standard polyethylene-equivalent weight-average molecular weight (Mw) as measured by gel permeation chromatography of 1000 to 9000, more preferably 1500 to 8000, and even more preferably 2000 to 7000.

The polyethylene-based wax according to the present invention preferably has a melting point of 70 to 130°C, and more preferably 80 to 129°C.

The melting point of the polyethylene-based wax was measured by differential scanning calorimeter (DSC) in accordance with JIS K7121.

<Polypropylene-based wax>

The polypropylene-based wax used as the unmodified polyolefin-based wax (C) according to the present invention is a wax composed of, for example, a homopolymer of propylene or a copolymer of propylene and ethylene or an α-olefin. As the α-olefin, α-olefins having 4 to 10 carbon atoms are preferred, α-olefins having 4 to 8 carbon atoms are more preferred, and 1-butene is even more preferred.

<Thermoplastic resin composition>

The thermoplastic resin composition of the present invention is a composition containing 10 to 50 parts by mass of the above thermoplastic resin (A), 50 to 90 parts by mass of the above metal oxide (B) [provided that the total amount of (A)+(B) is 100 parts by mass], and the above unmodified polyolefin-based wax (C) in a range of 0.1 to 20 parts by mass per 100 parts by mass of the total amount of (A)+(B).

The lower limit of the content of the thermoplastic resin (A) in the thermoplastic resin composition of the present invention is preferably 12 parts by mass, more preferably 16 parts by mass, and even more preferably 20 parts by mass. When the content of the thermoplastic resin (A) in the thermoplastic resin composition is a certain amount or more, existing molding methods such as injection molding can be performed.

The upper limit of the content of the thermoplastic resin (A) is preferably 45 parts by mass, more preferably 40 parts by mass, and even more preferably 36 parts by mass.

When the content of the thermoplastic resin (A) in the thermoplastic resin composition of the present invention is a certain amount or less, the heat conduction of the resulting thermoplastic resin composition is sufficiently exhibited and the resulting molded article has a feeling of weight and texture.

On the other hand, the lower limit of the content of the metal oxide (B) is preferably 55 parts by mass, more preferably 60 parts by mass, and even more preferably 68 parts by mass.

Moreover, the upper limit of the content of the metal oxide (B) is preferably 88 parts by mass, more preferably 84 parts by mass, and even more preferably 80 parts by mass.

In applications where antibacterial and/or antiviral properties are required, the lower limit of the content of metal oxide (B) is preferably 70 parts by mass, more preferably 72 parts by mass, and even more preferably 74 parts by mass. Naturally, the upper limit of the content of the thermoplastic resin (A) is preferably 30 parts by mass, more preferably 28 parts by mass, and even more preferably 26 parts by mass.

Having the amounts of the thermoplastic resin (A) and the metal oxide (B) within the above range allows to obtain a molded article with good moldability and having antibacterial and/or antiviral properties.

The thermoplastic resin composition of the present invention contains 0.1 to 20 parts by mass of the unmodified polyolefin-based wax (C) when the total of the thermoplastic resin (A) and the metal oxide (B) is 100 parts by mass. The lower limit of the content of the unmodified polyolefin-based wax (C) is preferably 0.2 parts by mass, more preferably 0.4 parts by mass, and even more preferably 0.5 parts by mass.

Moreover, the upper limit of the content of the unmodified polyolefin-based wax (C) is preferably 15 parts by mass, more preferably 10 parts by mass, and even more preferably 5 parts by mass.

When the thermoplastic resin composition of the present invention contains the unmodified polyolefin-based wax (C) in the above range, it is possible to improve kneadability by decreasing the mold torque during molding when obtaining the thermoplastic resin composition and when using the thermoplastic resin composition to perform the molding process. In addition, having a lower melt temperature than the thermoplastic resin (A) allows it to act as a lubricant and to prevent screw and cylinder wear.

On the other hand, since the thermoplastic resin composition of the present invention does not contain a modified polyolefin-based wax, there is no risk of generating strange odors during the molding process.

Furthermore, the molded article obtained from the thermoplastic resin composition of the present invention containing the unmodified polyolefin-based wax (C) has a harder feel and a texture closer to that of earthenware than a molded article obtained from a composition containing a modified polyolefin-based wax, and since there is no change in hydrophilicity, there is no risk of elution of the metal oxide or of causing a loss of texture.

The specific gravity of the thermoplastic resin composition of the present invention is preferably in the range of 1.0 to 5.0. The lower limit of the specific gravity of the thermoplastic resin composition of the present invention is more preferably 1.2, even more preferably 1.4, and particularly preferably 1.6. Moreover, the upper limit of the specific gravity is more preferably 4.0, even more preferably 3.0, and particularly preferably 2.5.

When the above range of specific gravity is satisfied, a molded article with a better texture can be obtained.

The thermal conductivity of the thermoplastic resin composition of the present invention is preferably in the range of 0.5 to 5 W/mK. The lower limit of the thermal conductivity of the thermoplastic resin composition of the present invention is more preferably 0.6 W/mK, even more preferably 0.65 W/mK, and particularly preferably 0.7 W/mK. Moreover, the upper limit of the thermal conductivity is more preferably 4.5 W/mK, even more preferably 4.0 W/mK, and particularly preferably 3.6 W/mK.

When the above range of thermal conductivity is satisfied, a molded article such as a container that feels cool to the touch and has a better texture can be obtained.

The thermoplastic resin composition of the present invention preferably has an antibacterial activity value of 2.0 or more using Escherichia coli or Staphylococcus aureus, and more preferably an antibacterial activity value of 2.0 or more using Escherichia coli and Staphylococcus aureus. The antibacterial activity value of the thermoplastic resin composition of the present invention can be increased, for example, by increasing the content of the metal oxide (B) (e.g., magnesium oxide). When the antibacterial activity value is 2.0 or more, it is considered to have an antibacterial effect. A higher antibacterial activity value is preferred as it indicates a higher antibacterial effect, and the upper limit thereof is not particularly limited.

The antibacterial activity value in the present invention is an index value in accordance with the test method in JIS Z 2801: 2012 "film adhesion method".

The thermoplastic resin composition of the present invention preferably has an antiviral activity value of 2.0 or more using Feline calicivirus. When the antiviral activity value is 2.0 or more, it is considered to have an antiviral effect. A higher antiviral activity value is preferred as it indicates a higher antiviral effect, and the upper limit thereof is not particularly limited.

The antiviral activity value in the present invention is an index value in accordance with the test method in ISO 21702:2019 "Measurement of antiviral activity on plastics and other non-porous surfaces".

The thermoplastic resin composition of the present invention may contain a fibrous filler (D) in addition to the unmodified polyolefin-based wax (C).

<Fibrous filler (D)>

The fibrous filler (D) according to the present invention is a fibrous filler, and specific examples thereof include glass fibers, carbon fibers, magnesium sulfate fibers, polyester fibers, nylon fibers, kenaf fibers, bamboo fibers, jute fibers, and inorganic crystal whisker fibers. Of these, glass fibers and carbon fibers are suitable.

When the thermoplastic resin composition of the present invention contains the fibrous filler (D), it improves mechanical properties such as strength of the resulting molded article.

If the thermoplastic resin composition of the present invention contains the fibrous filler (D), it is contained in a range of 0.1 to 20 parts by mass per 100 parts by mass of the total amount of the thermoplastic resin (A) and the metal oxide (B). The lower limit of the content of the fibrous filler (D) is preferably 0.2 parts by mass, and more preferably 0.3 parts by mass. Moreover, the upper limit of the content of the fibrous filler (D) is preferably 15 parts by mass, more preferably 10 parts by mass, and even more preferably 8 parts by mass.

The thermoplastic resin composition of the present invention may contain fillers other than the fibrous filler (D) as long as the effects of the present invention are not impaired. Examples of such fillers include inorganic fillers such as talc, mica, calcium carbonate, ammonium phosphate salts, silicates, carbonates, and carbon black; and organic fillers such as wood flour, cellulose, rice flour, starch, and cornstarch.

In addition to the above fibrous filler (D), the thermoplastic resin composition of the present invention may contain various known additives, such as plasticizers, lubricants, antioxidants, ultraviolet absorbers, heat stabilizers, pigments, pigment masterbatches, dyes, antistatic agents, flame retardants, coupling agents, and dispersing agents depending on the application as long as the object of the present invention is not impaired.

<Method for producing thermoplastic resin composition>

The thermoplastic resin composition of the present invention is obtained by mixing each of the above components by, for example, dry blending, a Henschel mixer, a Banbury mixer, or a kneader, or by melt-kneading them after mixing in a single-screw extruder, a twin-screw extruder, or a highspeed twin-screw extruder.

<Molded article>

The thermoplastic resin composition of the present invention has excellent moldability and can therefore be used in various molding methods. Specific examples of the molded article obtained from the thermoplastic resin composition of the present invention include an injection molded article, a foam molded article, an injection foam molded article, an extruded article, a hollow molded article, a vacuum/pressure formed article, a calender molded article, a stretched film, and an inflation film.

More specific examples include containers, for example, for food, tableware such as forks, knives, spoons, plates, teapots, and teacups, alcoholic drink ware such as tokkuri or choshi, and cutlery rests such as chopstick rests. These are very useful as tableware, alcoholic drink ware, containers, and cutlery as an alternative to ceramics in that they can be easily molded by injection molding, they allow to feel the warm/cold sensation of the contents, and appear heavy. It is also possible to expand to other applications using ceramics, for example, everyday items such as lampshades and vases, cases and structural materials for specific acoustic speakers (such as high-end speakers), plumbing products such as sinks and toilet bowls, and vases and pots for plants. In addition to applications using ceramics, its characteristics of imparting a heavy feeling and stability can be used to expand to applications such as models and toys typified by plastic models, furniture such as desks and chairs, home appliances such as refrigerators, rice cookers and vacuum cleaners, musical instruments such as piano keyboards, constructions such as tiles, artificial marble alternatives, and building materials, and fashion such as buttons. It may also be suitable as a filament for 3D printers by utilizing its warm/cold sensation and moldability.

In addition, the molded article of the present invention can be used in places that are touched by hands on a daily basis, and examples thereof include various containers such as bottles and jars, steering and shift knobs for vehicles and ships, door handles and door knobs, various switches, handrails, mice, keyboards, controllers, decorative accessories, stationery, smartphone covers, tablet covers, computer/tablet cases, and book covers, using its characteristics such as designability, stability, antibacterial properties, and feel.

Suitable examples of containers include containers for beauty-related products such as cosmetics (such as lotions and creams), shampoo (including body shampoo), and rinse, where these performances tend to have a high impact on the commercial value. More specific examples include lidded containers (including airless containers), containers in the form of compacts (for cosmetics), palettes (for cosmetics), and bottles.

In recent years, containers made of plastic such as polyolefin, which are lightweight and have excellent impact resistance, have been used in most of these applications, but it is an unsuitable material for producing a premium look and feel (including thermal conductivity and heavy feeling). Containers such as ceramics are suitable for producing a premium appearance, but they have major problems such as limited flexibility in terms of design and mass production, as well as low impact resistance.

Since the same molding methods as conventional plastic products can be applied to the container of the present invention, it can be considered suitable for the above applications not only because of its superior productivity and design, but also because it has superior impact resistance compared to ceramics and has the same weight feeling and thermal conductivity as ceramics.

Furthermore, the molded article obtained from the thermoplastic resin composition of the present invention is also useful as a heat-dissipating member in applications requiring high thermal conductivity. For example, it is very useful as a heat-dissipating member such as a heat-dissipating sheet in electronic components requiring high thermal conductivity and in various electronic devices such as notebook computers and mobile devices. In addition, if the thermoplastic resin composition of the present invention is applied to part or all of the cases of various electronic devices such as notebook computers and mobile devices, and used in combination with a heat-dissipating sheets, the heat dissipation performance of electronic devices can be expected to be further enhanced. Furthermore, it is possible to produce a case that can reduce the possibility of suffering, for example, from low temperature burn during prolonged manipulation by using the thermoplastic resin composition of the present invention for a part of the case of various electronic devices such as notebook computers and mobile devices, and using a material with a reduced metal oxide content or a material free of metal oxide for the other parts, for example, the parts that are often in contact with the hands during manipulation. Such a case can be produced, for example, by a method of installing a plurality of resin injection gates in a mold for molding the case and injecting resin of different composition into each gate.

As another application, it is also useful as an alternative material for metal cases by making use of, for example, its excellent thermal conductivity, freedom of shape during molding, and high impact strength. For example, it can be expected to be expanded to watch and wristwatch cases and belts, furniture parts (e.g., metal handles), and exterior materials for home appliances such as washing machines and refrigerators.

EXAMPLES

Hereinafter, the present invention will be more specifically described by way of Examples, but the present invention is not limited to the following Examples as long as the gist of the present invention is not exceeded. Each material used in the Examples is as follows. The evaluation method for each property is described below.

The thermoplastic resins (A) used in the Examples and Comparative Examples are shown below.

(1) Thermoplastic resin (A)

(1-1) Propylene-based polymer (A2-1): Propylene-ethylene block copolymer (manufactured by Prime Polymer Co., Ltd., trade name X860, MFR (230°C, 2.16 kg load) = 60 g/10 min, density = 900 kg/m$^3$, 25°C xylene-soluble fraction = 24% by mass, intrinsic viscosity of 25°C xylene-soluble fraction [η] = 2.5 dl/g, ethylene content of 25°C xylene-soluble fraction = 30% by mass).

(1-2) Propylene-based polymer (A2-2): Propylene-ethylene block copolymer (manufactured by Prime Polymer Co., Ltd., trade name J-6083HP, MFR (230°C, 2.16 kg load) = 60 g/10 min, density = 900 kg/m$^3$) .

(1-3) Propylene-based polymer (A2-3): Short glass fiber reinforced propylene (manufactured by Prime Polymer Co., Ltd., Prime Polypro (registered trademark) V7100, glass fiber content = 20 wt%, MFR (230°C, 2.16 kg load) = 18 g/10 min, density = 1030 kg/m$^3$) .

(1-4) Ethylene-based polymer (A1-1): High-density polyethylene (manufactured by Prime Polymer Co., Ltd., HI-ZEX (registered trademark) trade name 1300J, MFR (190°C, 2.16 kg load) = 13 g/10 min, density = 967 kg/m$^3$).

(1-5) Ethylene-based polymer (A1-2): High-density polyethylene (manufactured by Prime Polymer Co., Ltd., HI-ZEX (registered trademark) trade name 1700J, MFR (190°C, 2.16 kg load) = 16 g/10 min, MFR (230°C, 2.16 kg load) = 28 g/10 min, density = 967 kg/m$^3$) .

(1-6) Ethylene-based polymer (A1-3): Ethylene-1-butene copolymer (manufactured by Mitsui Chemicals, Inc., TAFMER (registered trademark) trade name A-35070S, MFR (190°C, 2.16 kg load) = 35 g/10 min, MFR (230°C, 2.16 kg load) = 65 g/10 min, density = 870 kg/m$^3$) .

(1-7) Propylene-based polymer (A2-4): Propylene homopolymer (manufactured by Prime Polymer Co., Ltd., trade name J13B, MFR (230°C, 2.16 kg load) = 200 g/10 min, density = 890 kg/m$^3$) .

(1-8) 4-Methyl-1-pentene-based polymer (A4-1): 4-Methyl-1-pentene-propylene copolymer was produced by the method described below.

(1-9) ABS resin (A5-1): ABS resin (manufactured by NIPPON A&L INC., trade name GA-704, MVR (220°C, 10 kg load) = 62 cm$^3$/10 min, MFR (230°C, 5 kg load) = 39.8 g/10 min, MFR (230°C, 2.16 kg load) = 13 g/10 min, density: 1040 kg/m$^3$)

[Method for producing 4-methyl-1-pentene-based polymer (A4-1)]

Into a fully nitrogen-substituted SUS autoclave with stirring blades having a capacity of 1.5 L, 300 ml of n-hexane (dried over activated alumina in dry nitrogen gas atmosphere) and 450 ml of 4 methyl-1-pentene were charged at 23°C. The autoclave was charged with 0.75 ml of a 1.0 mmol/ml toluene solution of triisobutylaluminum (TIBAL) and the stirrer was turned.

The autoclave was then heated to an internal temperature of 60°C and pressurized with propylene to a total pressure (gauge pressure) of 0.40 MPa.

Subsequently, 0.34 ml of a toluene solution containing 1 mmol of methylaluminoxane converted in terms of Al and 0.01 mmol of diphenylmethylene (1-ethyl-3-t-butylcyclopentadienyl) (2,7-di-t-butyl-fluorenyl) zirconium dichloride, which had been prepared in advance, was injected into an autoclave under pressure with nitrogen to initiate a polymerization reaction. The temperature was adjusted so that the internal temperature of the autoclave was 60°C during the polymerization reaction.

After 60 minutes from the initiation of the polymerization, 5 ml of methanol was injected into the autoclave under pressure with nitrogen to terminate the polymerization reaction, and then the autoclave was depressurized to atmospheric pressure. After depressurization, acetone was added to the reaction solution while stirring the reaction solution to obtain a polymerization reaction product containing a solvent.

The resulting polymerization reaction product containing a solvent was then dried under reduced pressure at 100°C for 12 hours to obtain 36.9 g of powdered 4-methyl-1-pentene-based polymer (A4-1).

The content of 4-methyl-1-pentene in the 4-methyl-1-pentene-based polymer (A4-1) was 72.5 mol%, and the propylene content was 27.5 mol%. The physical properties of the 4-methyl-1-pentene-based polymer (A4-1) are as follows.

The density was 839 kg/m$^3$, the intrinsic viscosity [η] was 1.5 dl/g, the weight-average molecular weight (Mw) was 337,000, the molecular weight distribution (Mw/Mn) was 2.1, the melt flow rate (MFR; 230°C, 2.16 kg load) was 11 g/10 min, and the melting point (Tm) was not observed. The peak temperature of tan δ was 30°C and the peak value was 2.78.

The MFR and density of each of the above thermoplastic resins (A) were measured by the following methods.

[Melt flow rate (MFR) (g/10 min)]

The melt flow rate was measured in accordance with ASTM D1238 at a temperature of 190°C and a load of 2.16 kg, at a temperature of 230°C and a load of 2.16 kg, or at a temperature of 230°C and a load of 5 kg.

[Density]

The density was measured in accordance with JIS K 7112.

[Composition of 4-methyl-1-pentene-based polymer (A4-1)]

The content (mol%) of each structural unit (4-methyl-1-pentene and $\alpha$-olefins) in the 4-methyl-1-pentene-based polymer (A4-1) was measured by $^{13}$C-NMR.

- Measuring equipment: Nuclear magnetic resonance apparatus (Model ECP500, manufactured by JEOL Ltd.)
- Observed nucleus: $^{13}$C (125 MHz)
- Sequence: Single-pulse proton decoupling
- Pulse width: 4.7 $\mu$sec (45° pulse)
- Repetition time: 5.5 sec
- Number of scans: 10,000 or more
- Solvent: mixed solvent of o-dichlorobenzene/hexadeuterobenzene (Volume ratio: 80/20)
- Sample concentration: 55 mg/0.6 mL
- Measurement temperature: 120°C
- Chemical shift reference value: 27.50 ppm

[Intrinsic viscosity [$\eta$] of 4-methyl-1-pentene-based polymer (A4-1)]

The intrinsic viscosity [$\eta$] was measured at 135°C in a decalin solvent using an Ubbelohde viscometer as the measuring apparatus.
After dissolving about 20 mg of a specific 4-methyl-1-pentene-based copolymer in 25 ml of decalin, the specific viscosity $\eta$sp is measured in an oil bath at 135°C using an Ubbelohde viscometer. 5 ml of decalin was added to this decalin solution for dilution, and then the specific viscosity $\eta$sp was measured in the same manner as described above. This dilution operation was repeated twice more, and the value of $\eta$sp/C when the concentration (C) was extrapolated to 0 was determined as the intrinsic viscosity [$\eta$] (unit: dl/g) (see Equation 1 below).

$$[\eta] = \lim(\eta sp/C) \quad (C \to 0) \quad \text{Equation 1}$$

[Weight-average molecular weight (Mw) and molecular weight distribution (Mw/Mn) of the 4-methyl-1-pentene-based polymer (A4-1)]

The weight-average molecular weight (Mw), and the molecular weight distribution (Mw/Mn) expressed as the ratio of the weight-average molecular weight (Mw) to the number-average molecular weight (Mn) were calculated by a standard polystyrene conversion method using gel permeation chromatography (GPC).

- Conditions -

Measuring equipment: GPC (ALC/GPC 150-C plus type, integrated differential refractometer detector, manufactured by Waters)
Column: Two GMH6-HT (manufactured by Tosoh Corporation) and two GMH6-HTL (manufactured by Tosoh Corporation) connected in series
Eluent: o-dichlorobenzene
Column temperature: 140°C
Flow rate: 1.0 mL/min

[Melting point (Tm) of 4-methyl-1-pentene-based polymer (A4-1)]

The melting point (Tm) was measured using a differential scanning calorimeter (DSC220C model, manufactured by Seiko Instruments Inc) as the measurement apparatus. About 5 mg of the polymer was sealed into an aluminum pan for measurement and heated from room temperature to 200°C at 10°C/min. The polymer was held at 200°C for 5 min for complete melting and then cooled to -50°C at 10°C/min. After 5 minutes at -50°C, it was heated for the second time to 200°C at 10°C/min, and the peak temperature (°C) at this second heating was regarded as the melting point (Tm) of the polymer. When a plurality of peaks were detected, the peak detected on the highest temperature side was taken.

[Dynamic viscoelasticity of 4-methyl-1-pentene-based polymer (A4-1)]

In the measurement of dynamic viscoelasticity, a 3 mm thick press sheet composed of the resin to be measured was used as the measurement sample, and a 45 mm x 10 mm x 3 mm strip required for the dynamic viscoelasticity measurement was further cut out. Using MCR 301 manufactured by ANTON Paar, the temperature dependence of the dynamic viscoelasticity was measured at a frequency of 10 rad/s (1.6 Hz) at -40 to 150°C and the temperature at which the loss tangent (tan δ) due to the glass transition temperature reached its peak value (maximum value) (hereinafter also referred to as "peak value temperature") and the value of the loss tangent (tan δ) at that time were measured in the range of 0 to 40°C.

The metal oxides (B) used in the Examples and Comparative Examples are shown below.

(2) Metal oxide (B)

(2-1) Magnesium oxide (B-1): MgO (manufactured by Kyowa Chemical Industry, PYROKISUMA 5301, average particle size = 2 pm) .
(2-2) Magnesium oxide (B-2): MgO (manufactured by Kyowa Chemical Industry, PYROKISUMA 3320, average particle size = 20 pm) .
(2-3) Magnesium oxide (B-3): Magnesium oxide treated as shown below was used.

MgO (DENMAG KMAO-H manufactured by Tateho Chemical Industries Co., Ltd. (average particle size = 45 to 355 $\mu$m)) was sieved through a 180-250 mesh sieve to obtain the magnesium oxide (B-3) with an average particle size = about 60 to 80 $\mu$m.

The unmodified polyolefin-based wax (C) used in the Examples and Comparative Examples is shown below.

(3) Unmodified Polyolefin-Based Wax (C)

(3-1) Unmodified polyolefin-based wax (C-1): Ethylene-1-butene copolymer (manufactured by Mitsui Chemicals, Inc., trade name EXCEREX 30050B, density = 907 kg/m$^3$, acid value = 0 mgKOH/g, melting point = 91°C, weight-average molecular weight = 5100, molecular weight distribution Mw/Mn = 2.6).

(4) Modified Polyolefin-Based Wax

(4-1) Modified polyolefin-based wax: Modified polyolefin polymer (manufactured by Mitsui Chemicals, Inc., trade name EXCEREX 15341PA, density = 930 kg/m$^3$, acid value = 14 mgKOH/g, melting point = 89°C).

Properties of the thermoplastic resin compositions prepared in Examples and Comparative Examples were measured by the following methods.

[Specific gravity]

The specific gravity was measured by relative comparison with the density of water at 4°C by the substitution in water method.

[Melt flow rate (MFR) (g/10 min)]

The melt flow rate was measured in accordance with ASTM D1238 at a temperature of 230°C and a load of 2.16 kg, or at a temperature of 230°C and a load of 5 kg.

[Pencil hardness]

The pencil hardness was measured at a test load of 750 g.

[Thermal conductivity (W/m·K)]

The thermal conductivity was measured by the steady method heat flow meter method. Specifically, it was measured at a temperature of 30°C in accordance with ASTM E1530 using a GH-1 measuring instrument manufactured by ULVAC-RIKO, Inc.

[Measurement of deflection temperature under load (°C)]

The deflection temperature under load was measured in accordance with the method A of ISO 75-2 using test specimens (2 mm × 10 mm × 80 mm) at a temperature increase rate of 120°C/hour, a test starting temperature: 35°C, and a bending stress of 1.8 MPaG. For the HDT measurement, a fully automated HDT tester Model 6A-2 (manufactured by Toyo Seiki Seisaku-sho, Ltd.) was used.

[Water absorption rate (wt%)]

The water absorption rate was measured at 23°C for 24 hours.

[Antibacterial activity value (-)]

The test was performed in accordance with the test method in JIS Z 2801: 2012 "film adhesion method" and the antibacterial activity value was calculated by the following formula.
"Antibacterial activity value" = "common logarithm of number of viable bacteria in blank sample 24 hours after inoculation with Escherichia coli or Staphylococcus aureus" - "common logarithm of number of viable bacteria in test specimen 24 hours after inoculation with Escherichia coli or Staphylococcus aureus".
The test strains used in the test are shown below.

Antibacterial activity value (Escherichia coli): Escherichia coli NBRC 3972
Antibacterial activity value (Staphylococcus aureus): Staphylococcus aureus NBRC 12732

[Antiviral activity value (-)]

The antiviral activity values of the thermoplastic resin compositions were determined in accordance with the test method in ISO 21702:2019.
Specifically, a 50 mm square sample was placed in a sterile petri dish and 0.4 mL of viral solution was inoculated onto the sample. The sample was then covered by a coated film. After covering the petri dish, the sample was inoculated with the virus for 24 hours at a temperature of 25°C and humidity of 90% or more. The viruses were collected from the sample, the viral infectivity titer was measured by the plaque method, and the antiviral activity value was calculated by the following formula.
"Antiviral activity value" = "common logarithm of viral infectivity titer of blank sample 24 hours after inoculation with virus [Ut]" - "common logarithm of viral infectivity titer of test specimen 24 hours after inoculation with virus [At] "
The virus used in the test is shown below.
Feline calicivirus: ATCC VR-782

(1) Antibacterial properties (water resistance category 0 and light resistance category 0: where no light or water resistance pretreatment is performed)

For water resistance category 0 and light resistance category 0, a test by the above "film adhesion method" was performed on samples that had not undergone any water or light resistance pretreatment as described in the "Society of International sustaining growth for Antimicrobial Articles, Test Methods, Sustainability Test Methods (2020 Edition) (1) Water Resistance Test" and "Society of International sustaining growth for Antimicrobial Articles, Test Methods, Sustainability Test Methods (2020 Edition) (2) Light resistance test" to calculate the antibacterial activity values.
In the pretreatment, samples are treated under the test conditions (water temperature, immersion time, or light source exposure time) specified for each category, assuming that products with antibacterial or antiviral properties will have a degradation of their performance by contact with water, for example, or exposure to light.

(2) Antibacterial sustainability (water resistance category 1 and water resistance category 2)

For water resistance category 1 and water resistance category 2, a test by the above "film adhesion method" was performed using samples pretreated in accordance with the "Society of Industrial Technology for Antibacterial Articles, Test Methods, Sustainability Test Methods (2020 Edition) (1) Water Resistance Test" to calculate the antibacterial activity values.

(3) Antibacterial sustainability (light resistance category 1 and light resistance category 2)

For light resistance category 1 and light resistance category 2, a test by the above "film adhesion method" was performed using samples pretreated in accordance with the "Society of Industrial Technology for Antibacterial Articles, Test Methods, Sustainability Test Methods (2020 Edition) (2) Light Resistance Test" to calculate the antibacterial activity values.

[Example 1]

30 parts by mass of the propylene-based polymer (A2-1), 70 parts by mass of the magnesium oxide (B-1), and 0.6 parts by mass of the unmodified polyolefin-based wax (C-1) were kneaded using a kneader (tabletop kneader (manufactured by IRIE SHOKAI Co., Ltd.)) at 200°C and 15 to 35 rpm to obtain a thermoplastic resin composition. The resulting pellets of thermoplastic resin composition were made into press sheets at 200°C using a manual hydraulic heat press machine (manufactured by Imoto Machinery Co., LTD) to obtain samples for testing physical properties. The resulting sheets, for example, were used to measure the physical properties by the methods described above.
The results are shown in Table 1.

[Example 2]

The samples for testing physical properties were produced in the same manner as in Example 1, except that 23 parts by mass of the propylene-based polymer (A2-2), 2.0 parts by mass of the ethylene-based polymer (A1-3), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above. In addition, the antibacterial sustainability test in water resistance category 0 and light resistance category 0 were performed by the method described above.
The results are shown in Table 1.
In addition, the antibacterial and antiviral sustainability tests in water resistance category 1, water resistance category 2, light resistance category 1, and light resistance category 2 were performed by the method described above.
The results of the antibacterial sustainability test in water resistance categories 1 and 2 and light resistance categories 1 and 2 are shown in Table 2, and the results of the antiviral sustainability tests in water resistance categories 1 and 2 and light resistance categories 1 and 2 are shown in Table 3.

[Example 3]

The samples for testing physical properties were produced in the same manner as in Example 1, except that 23 parts by mass of the propylene-based polymer (A2-2), 2.0 parts by mass of the ethylene-based polymer (A1-3), 15 parts by mass of the magnesium oxide (B-1), 60 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.
The results are shown in Table 1.

[Example 4]

The samples for testing physical properties were produced in the same manner as in Example 1, except that 23 parts by mass of the propylene-based polymer (A2-2), 2.0 parts by mass of the ethylene-based polymer (A1-3), 22.5 parts by mass of the magnesium oxide (B-1), 52.5 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.
The results are shown in Table 1.

[Example 5]

The samples for testing physical properties were produced in the same manner as in Example 1, except that 24.5 parts by mass of the propylene-based polymer (A2-2), 0.5 parts by mass of the ethylene-based polymer (A1-3), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 6]

The samples for testing physical properties were produced in the same manner as in Example 1, except that 29.5 parts by mass of the propylene-based polymer (A2-2), 0.5 parts by mass of the ethylene-based polymer (A1-3), 70 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 7]

The samples for testing physical properties were produced in the same manner as in Example 1, except that 34.5 parts by mass of the propylene-based polymer (A2-2), 0.5 parts by mass of the ethylene-based polymer (A1-3), 65 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above. In addition, the antibacterial sustainability test in water resistance category 0 and light resistance category 0 were performed by the method described above.

The results are shown in Table 1.

[Example 8]

The samples for testing physical properties were produced in the same manner as in Example 1, except that 23 parts by mass of the propylene-based polymer (A2-3), 2.0 parts by mass of the ethylene-based polymer (A1-3), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

The propylene-based polymer (A2-3) is blended with 20% by mass glass fiber as described above. The formulation ratio when the total amount of propylene-based polymer (A2-3) excluding the glass fiber (PP portion) and magnesium oxide (B-2) is calculated as 100 parts by mass is as follows. 19.3 parts by mass of the PP portion of the propylene-based polymer (A2-3), 2.1 parts by mass of the ethylene-based polymer (A1-3), 78.6 parts by mass of the magnesium oxide (B-2), 0.6 parts by mass of the unmodified polyolefin-based wax (C-1), and 4.8 parts by mass of the glass fiber portion of the propylene-based polymer (A2-3).

[Example 9]

The samples for testing physical properties were produced in the same manner as in Example 1, except that 11.5 parts by mass of the propylene-based polymer (A2-2), 11.5 parts by mass of the propylene-based polymer (A2-3), 2.0 parts by mass of the ethylene-based polymer (A1-3), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

The propylene-based polymer (A2-3) is blended with 20% by mass glass fiber as described above. The formulation ratio when the total amount of propylene-based polymer (A2-3) excluding the glass fiber (PP portion), propylene-based polymer (A2-2), and magnesium oxide (B-2) is calculated as 100 parts by mass is as follows. 11.8 parts by mass of the propylene-based polymer (A2-2), 9.4 parts by mass of the PP portion of the propylene-based polymer (A2-3), 2.0 parts by mass of the ethylene-based polymer (A1-3), 76.8 parts by mass of the magnesium oxide (B-2), 0.6 parts by mass of the unmodified polyolefin-based wax (C-1), and 2.4 parts by mass of the glass fiber portion of the propylene-based polymer (A2-3).

[Example 10]

The samples for testing physical properties were produced in the same manner as in Example 1, except that 15.3 parts by mass of the propylene-based polymer (A2-2), 7.7 parts by mass of the propylene-based polymer (A2-3), 2.0 parts by mass of the ethylene-based polymer (A1-3), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

The propylene-based polymer (A2-3) is blended with 20% by mass glass fiber as described above. The formulation ratio when the total amount of propylene-based polymer (A2-3) excluding the glass fiber (PP portion), propylene-based polymer (A2-2), and magnesium oxide (B-2) is calculated as 100 parts by mass is as follows. 15.5 parts by mass of the propylene-based polymer (A2-2), 6.3 parts by mass of the PP portion of the propylene-based polymer (A2-3), 2.0 parts by mass of the ethylene-based polymer (A1-3), 76.2 parts by mass of the magnesium oxide (B-2), 0.6 parts by mass of the unmodified polyolefin-based wax (C-1), and 1.6 parts by mass of the glass fiber portion of the propylene-based polymer (A2-3).

[Example 11]

The samples for testing physical properties were produced in the same manner as in Example 1, except that 25 parts by mass of the ethylene-based polymer (A1-1), 22.5 parts by mass of the magnesium oxide (B-1), 52.5 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 12]

The samples for testing physical properties were produced in the same manner as in Example 1, except that 25 parts by mass of the ethylene-based polymer (A1-1), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 13]

The samples for testing physical properties were produced in the same manner as in Example 1, except that 33 parts by mass of the ethylene-based polymer (A1-1), 2.0 parts by mass of the ethylene-based polymer (A1-3), 65 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 14]

The samples for testing physical properties were produced in the same manner as in Example 1, except that 18 parts by mass of the ethylene-based polymer (A1-1), 2.0 parts by mass of the ethylene-based polymer (A1-3), 80 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 15]

The samples for testing physical properties were produced in the same manner as in Example 1, except that 25 parts by mass of the ethylene-based polymer (A1-2), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 16]

The samples for testing physical properties were produced in the same manner as in Example 1, except that 23 parts by mass of the ethylene-based polymer (A1-2), 2.0 parts by mass of the ethylene-based polymer (A1-3), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above. In addition, the antibacterial sustainability test in water resistance category 0 and light resistance category 0 were performed by the method described above.
The results are shown in Table 1.

[Example 17]

The samples for testing physical properties were produced in the same manner as in Example 1, except that 23 parts by mass of the ethylene-based polymer (A1-2), 2.0 parts by mass of the ethylene-based polymer (A1-3), 75 parts by mass of the magnesium oxide (B-2), 0.6 parts by mass of the unmodified polyolefin-based wax (C-1), and 1.0 parts by mass of carbon black were used instead of the raw materials used as the raw materials for the thermoplastic resin composition in Example 1, and the physical properties were measured by the methods described above.
The results are shown in Table 1.

[Example 18]

The samples for testing physical properties were produced in the same manner as in Example 1, except that 28 parts by mass of the propylene-based polymer (A2-2), 2.0 parts by mass of the ethylene-based polymer (A1-3), 70 parts by mass of the magnesium oxide (B-3), and 0.6 parts by mass of the unmodified polyolefin-based wax (C-1) were used instead of the raw materials used as the raw materials for the thermoplastic resin composition in Example 1, and the physical properties were measured by the methods described above.
The results are shown in Table 1.

[Example 19]

The samples for testing physical properties were produced in the same manner as in Example 1, except that 28 parts by mass of the propylene-based polymer (A2-2), 2.0 parts by mass of the ethylene-based polymer (A1-3), 70 parts by mass of the magnesium oxide (B-3), and 1 parts by mass of the unmodified polyolefin-based wax (C-1) were used instead of the raw materials used as the raw materials for the thermoplastic resin composition in Example 1, and the physical properties were measured by the methods described above.
The results are shown in Table 1.

[Example 20]

The samples for testing physical properties were produced in the same manner as in Example 1, except that 28 parts by mass of the propylene-based polymer (A2-2), 2.0 parts by mass of the ethylene-based polymer (A1-3), 70 parts by mass of the magnesium oxide (B-3), and 2 parts by mass of the unmodified polyolefin-based wax (C-1) were used instead of the raw materials used as the raw materials for the thermoplastic resin composition in Example 1, and the physical properties were measured by the methods described above.
The results are shown in Table 1.

[Example 21]

The samples for testing physical properties were produced in the same manner as in Example 1, except that 23 parts by mass of the propylene-based polymer (A2-2), 2.0 parts by mass of the ethylene-based polymer (A1-3), 75 parts by mass of the magnesium oxide (B-3), and 0.6 parts by mass of the unmodified polyolefin-based wax (C-1) were used instead of the raw materials used as the raw materials for the thermoplastic resin composition in Example 1, and the physical properties were measured by the methods described above.
The results are shown in Table 1.

[Example 22]

The samples for testing physical properties were produced in the same manner as in Example 1, except that 14 parts by mass of the propylene-based polymer (A2-2), 14 parts by mass of the propylene-based polymer (A2-4), 2.0 parts by mass of the ethylene-based polymer (A1-3), 70 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 23]

The samples for testing physical properties were produced in the same manner as in Example 1, except that 18.7 parts by mass of the propylene-based polymer (A2-2), 9.3 parts by mass of the propylene-based polymer (A2-3), 2.0 parts by mass of the ethylene-based polymer (A1-3), 70 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

The propylene-based polymer (A2-3) is blended with 20% by mass glass fiber as described above. The formulation ratio when the total amount of propylene-based polymer (A2-3) excluding the glass fiber (PP portion), propylene-based polymer (A2-2), and magnesium oxide (B-2) is calculated as 100 parts by mass is as follows. 19.1 parts by mass of the propylene-based polymer (A2-2), 7.6 parts by mass of the PP portion of the propylene-based polymer (A2-3), 2.0 parts by mass of the ethylene-based polymer (A1-3), 71.3 parts by mass of the magnesium oxide (B-2), 0.6 parts by mass of the unmodified polyolefin-based wax (C-1), and 1.9 parts by mass of the glass fiber portion of the propylene-based polymer (A2-3).

[Example 24]

The samples for testing physical properties were produced in the same manner as in Example 1, except that 11.5 parts by mass of the propylene-based polymer (A2-3), 11.5 parts by mass of the propylene-based polymer (A2-4), 2.0 parts by mass of the ethylene-based polymer (A1-3), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

The propylene-based polymer (A2-3) is blended with 20% by mass glass fiber as described above. The formulation ratio when the total amount of propylene-based polymer (A2-3) excluding the glass fiber (PP portion), propylene-based polymer (A2-4), and magnesium oxide (B-2) is calculated as 100 parts by mass is as follows. 9.4 parts by mass of the PP portion of the propylene-based polymer (A2-3), 11.8 parts by mass of the propylene-based polymer (A2-4), 2.0 parts by mass of the ethylene-based polymer (A1-3), 76.8 parts by mass of the magnesium oxide (B-2), 0.6 parts by mass of the unmodified polyolefin-based wax (C-1), and 2.4 parts by mass of the glass fiber portion of the propylene-based polymer (A2-3).

[Example 25]

The samples for testing physical properties were produced in the same manner as in Example 1, except that 14 parts by mass of the propylene-based polymer (A2-3), 14 parts by mass of the propylene-based polymer (A2-4), 2.0 parts by mass of the ethylene-based polymer (A1-3), 70 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

The propylene-based polymer (A2-3) is blended with 20% by mass glass fiber as described above. The formulation ratio when the total amount of propylene-based polymer (A2-3) excluding the glass fiber (PP portion), propylene-based polymer (A2-4), and magnesium oxide (B-2) is calculated as 100 parts by mass is as follows. 11.5 parts by mass of the PP portion of the propylene-based polymer (A2-3), 14.4 parts by mass of the propylene-based polymer (A2-4), 2.1 parts by mass of the ethylene-based polymer (A1-3), 72 parts by mass of the magnesium oxide (B-2), 0.6 parts by mass of the unmodified polyolefin-based wax (C-1), and 2.9 parts by mass of the glass fiber portion of the propylene-based polymer (A2-3).

[Example 26]

The samples for testing physical properties were produced in the same manner as in Example 1, except that 14 parts by mass of the propylene-based polymer (A2-3), 14 parts by mass of the propylene-based polymer (A2-4), 2.0 parts by mass of the ethylene-based polymer (A1-3), 70 parts by mass of the magnesium oxide (B-2), and 1.0 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

The propylene-based polymer (A2-3) is blended with 20% by mass glass fiber as described above. The formulation ratio when the total amount of propylene-based polymer (A2-3) excluding the glass fiber (PP portion), propylene-based polymer (A2-4), and magnesium oxide (B-2) is calculated as 100 parts by mass is as follows. 11.5 parts by mass of the PP portion of the propylene-based polymer (A2-3), 14.4 parts by mass of the propylene-based polymer (A2-4), 2.1 parts by mass of the ethylene-based polymer (A1-3), 72 parts by mass of the magnesium oxide (B-2), 1.0 parts by mass of the unmodified polyolefin-based wax (C-1), and 2.9 parts by mass of the glass fiber portion of the propylene-based polymer (A2-3).

[Example 27]

The samples for testing physical properties were produced in the same manner as in Example 1, except that 33 parts by mass of the ethylene-based polymer (A1-2), 2.0 parts by mass of the ethylene-based polymer (A1-3), 65 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 28]

The samples for testing physical properties were produced in the same manner as in Example 1, except that 35.0 parts by mass of the 4-methyl-1-pentene-based polymer (A4-1), 65 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 29]

The samples for testing physical properties were produced in the same manner as in Example 1, except that 30 parts by mass of the 4-methyl-1-pentene-based polymer (A4-1), 70 parts by mass of the magnesium oxide (B-2), and 0.6 parts by mass of the unmodified polyolefin-based wax (C-1) were used instead of the raw materials used as the raw materials for the thermoplastic resin composition in Example 1. In addition, the antibacterial sustainability test in water resistance category 0 and light resistance category 0 were performed by the method described above.

The results are shown in Table 1.

[Example 30]

The samples for testing physical properties were produced in the same manner as in Example 1, except that 25 parts by mass of the 4-methyl-1-pentene-based polymer (A4-1), 75 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 31]

The samples for testing physical properties were produced in the same manner as in Example 1, except that 35 parts by mass of the ABS resin (A5-1), 65 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1.

[Example 32]

The samples for testing physical properties were produced in the same manner as in Example 1, except that 30 parts by mass of the ABS resin (A5-1), 70 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1. In addition, the antibacterial sustainability test in water resistance category 0 and light resistance category 0 were performed by the method described above.

[Example 33]

The samples for testing physical properties were produced in the same manner as in Example 1, except that 25 parts by mass of the ABS resin (A5-1), 75 parts by mass of the magnesium oxide (B-2), and 0.6 parts by mass of the unmodified polyolefin-based wax (C-1) were used instead of the raw materials used as the raw materials for the thermoplastic resin composition in Example 1.

The results are shown in Table 1.

[Comparative Example 1]

The samples for testing physical properties were produced in the same manner as in Example 1, except that 68 parts by mass of the propylene-based polymer (A2-2), 2.0 parts by mass of the ethylene-based polymer (A1-3), 30 parts by mass of the magnesium oxide (B-2), and 0.6 parts by mass of the unmodified polyolefin-based wax (C-1) were used instead of the raw materials used as the raw materials for the thermoplastic resin composition in Example 1, and the physical properties were measured by the methods described above.

The results are shown in Table 1. The composition obtained by Comparative Example 1 does not provide a premium texture like ceramics as it does not easily transmit heat due to its low thermal conductivity.

[Comparative Example 2]

The samples for testing physical properties were produced in the same manner as in Example 1, except that 23 parts by mass of the propylene-based polymer (A2-2), 2.0 parts by mass of the ethylene-based polymer (A1-3), 75 parts by mass of the magnesium oxide (B-2), and 0.6 parts by mass of modified polyolefin-based wax were used instead of the raw materials used as the raw materials for the thermoplastic resin composition in Example 1, and the physical properties were measured by the methods described above.

The results are shown in Table 1. The composition obtained by Comparative Example 2 had a lower deflection temperature under load and lower physical properties. This is thought to be because the acid value of the modified polyolefin-based wax is low, resulting in weak hydrogen bonds with the metal oxide (hereinafter also referred to as filler), and the filler not uniformly dispersed in the resin. On the other hand, it is thought that while the unmodified polyolefin-based wax (C) used in the Examples has an acid value of 0, resulting in weak hydrogen bonds with the filler, the interaction in the small amount of resin acting as a binder is stronger, and therefore the deflection temperature under load and physical properties of the resulting composition are good.

[Comparative Example 3]

The samples for testing physical properties were produced in the same manner as in Example 1, except that 23 parts by mass of the propylene-based polymer (A2-2), 2.0 parts by mass of the ethylene-based polymer (A1-3), and 75 parts by mass of the magnesium oxide (B-2) were used instead of the raw materials used as the raw materials for the thermoplastic resin composition in Example 1, and the physical properties were measured by the methods described above.

The results are shown in Table 1. Since the composition obtained by Comparative Example 3 did not contain the unmodified polyolefin-based wax (C), the filler tended to agglomerate and was difficult to disperse uniformly, making it difficult to produce and uneven, resulting in inferior kneadability and resin fluidity (MFR).

[Table 1-1]

| Table 1 | | | | | Example 1 | Example 2 | Example 3 | Example 4 | Example 5 |
|---|---|---|---|---|---|---|---|---|---|
| Thermoplastic resin (A) | Propylene-based polymer (A2) | (A2-1) | parts by mass | | 30.0 | | | | |
| | | (A2-2) | parts by mass | | | 23.0 | 23.0 | 23.0 | 24.5 |
| | | (A2-3) PP portion | parts by mass | | | | | | |
| | | (A2-4) | parts by mass | | | | | | |
| | Ethylene-based polymer (A1) | (A1-1) | parts by mass | | | | | | |
| | | (A1-2) | parts by mass | | | | | | |
| | | (A1-3) | parts by mass | | | 2.0 | 2.0 | 2.0 | 0.5 |
| | 4-Methyl-1-pentene-based polymer (A4) | (A4-1) | parts by mass | | | | | | |
| | ABS resin (A5) | (A5-1) | parts by mass | | | | | | |
| | | Subtotal | | | 30.0 | 25.0 | 25.0 | 25.0 | 25.0 |
| Metal oxide (B) | Magnesium oxide (B-1) | | parts by mass | | 70.0 | | 15.0 | 22.5 | |
| | Magnesium oxide (B-2) | | parts by mass | | | 75.0 | 60.0 | 52.5 | 75.0 |
| | Magnesium oxide (B-3) | | parts by mass | | | | | | |
| | | Subtotal | | | 70.0 | 75.0 | 75.0 | 75.0 | 75.0 |
| | (B-1)/(B-2) ratio | | Mass ratio | | 100/0 | 0/100 | 20/80 | 30/70 | 0/100 |
| Total | | | parts by mass | | 100 | 100 | 100 | 100 | 100 |

(continued)

| Table 1 | | | | | | | |
|---|---|---|---|---|---|---|---|
| | | | Example 1 | Example 2 | Example 3 | Example 4 | Example 5 |
| Unmodified polyolefin-based wax (C) | (C-1) | parts by mass | 0.6 | 0.6 | 0.6 | 0.6 | 0.6 |
| Other components | Modified polyolefin-based wax | parts by mass | | | | | |
| | (A2-3) glass fiber portion | parts by mass | | | | | |
| | Carbon black | parts by mass | | | | | |
| Mechanical properties | Specific gravity | g/cm$^3$ | 2.30 | 2.01 | 1.98 | 1.95 | 2.00 |
| | MFR (230°C, 2.16 kgf) | g/10 min | 1.0 | 25.3 | 19 | 19.2 | 28.3 |
| | MFR (230°C, 5 kgf) | g/10 min | | 92.7 | 68.2 | 70.3 | 104 |
| | Pencil hardness | | | HB | 3B | 4B | 2H |
| Thermal properties | Thermal conductivity | W/m•K | 1.8 | 1.32 | 1.37 | 1.41 | 1.2 |
| | Deflection temperature under load (1.8 MPa) | °C | 58 | 75.5 | 67 | 66 | 71.5 |
| Chemical properties | Water absorption rate | wt% | 0.01 | 0.01 | 0 | 0 | 0.01 |
| Antibacterial properties (water resistance category 0/light resistance category 0) | Antibacterial activity value (Escherichia coli) | - | | 5.4 | | | |
| | Antibacterial activity value (Staphylococcus aureus) | - | | 4.0 | | | |

Table 1 (continued)

| | | | | Example 6 | Example 7 | Example 8 | Example 9 | Example 10 |
|---|---|---|---|---|---|---|---|---|
| Thermoplastic resin (A) | Propylene-based polymer (A2) | (A2-1) | parts by mass | | | | | |
| | | (A2-2) | parts by mass | 29.5 | 34.5 | | 11.8 | 15.5 |
| | | (A2-3) PP portion | parts by mass | | | 19.3 | 9.4 | 6.3 |
| | | (A2-4) | parts by mass | | | | | |
| | Ethylene-based polymer (A1) | (A1-1) | parts by mass | | | | | |
| | | (A1-2) | parts by mass | | | | | |
| | | (A1-3) | parts by mass | 0.5 | 0.5 | 2.1 | 2.0 | 2.0 |
| | 4-Methyl-1-pentene-based polymer (A4) | (A4-1) | parts by mass | | | | | |
| | ABS resin (A5) | (A5-1) | parts by mass | | | | | |
| | | Subtotal | | 30.0 | 35.0 | 21.4 | 23.2 | 23.8 |
| Metal oxide (B) | Magnesium oxide (B-1) | | parts by mass | | | | | |
| | Magnesium oxide (B-2) | | parts by mass | 70.0 | 65.0 | 78.6 | 76.8 | 76.2 |
| | Magnesium oxide (B-3) | | parts by mass | | | | | |
| | Subtotal | | | 70.0 | 65.0 | 78.6 | 76.8 | 76.2 |
| | (B-1)/(B-2) ratio | | Mass ratio | 0/100 | 0/100 | 0/100 | 0/100 | 0/100 |
| Total | | | parts by mass | 100 | 100 | 100 | 100 | 100 |

(continued)

| | | | Example 6 | Example 7 | Example 8 | Example 9 | Example 10 |
|---|---|---|---|---|---|---|---|
| Unmodified polyolefin-based wax (C) | (C-1) | parts by mass | 0.6 | 0.6 | 0.6 | 0.6 | 0.6 |
| Other components | Modified polyolefin-based wax | parts by mass | | | | | |
| | (A2-3) glass fiber portion | parts by mass | | | 4.8 | 2.4 | 1.6 |
| | Carbon black | parts by mass | | | | | |
| Mechanical properties | Specific gravity | g/cm3 | 1.85 | 1.73 | 2.09 | 2.07 | 2.03 |
| | MFR (230°C, 2.16 kgf) | g/10 min | 36.6 | 43.7 | 8.0 | 9.47 | 12.8 |
| | MFR (230°C, 5 kgf) | g/10 min | 132 | 156 | 29.8 | 41.3 | 48.9 |
| | Pencil hardness | | B | B | 4H | 3H | 4H |
| Thermal properties | Thermal conductivity | W/m•K | 1.05 | 0.79 | 1.82 | 1.58 | 1.28 |
| | Deflection temperature under load (1.8 MPa) | °C | 72.3 | 72.3 | 107.6 | 89.8 | 87.8 |
| Chemical properties | Water absorption rate | wt% | 0 | 0.01 | 0.01 | 0.01 | 0.01 |
| Antibacterial properties (water resistance category 0/light resistance category 0) | Antibacterial activity value (Escherichia coli) | - | | | 1.5 | | |
| | Antibacterial activity value (Staphylococcus aureus) | - | | | 3.9 | | |

[Table 1-2]

| Table 1 (continued) | | | | | Example 11 | Example 12 | Example 13 | Example 14 | Example 15 | Example 16 |
|---|---|---|---|---|---|---|---|---|---|---|
| Thermoplastic resin (A) | Propylene-based polymer (A2) | (A2-1) | parts by mass | | | | | | | |
| | | (A2-2) | parts by mass | | | | | | | |
| | | (A2-3) PP portion | parts by mass | | | | | | | |
| | | (A2-4) | parts by mass | | | | | | | |
| | Ethylene-based polymer (A1) | (A1-1) | parts by mass | | 25.0 | 25.0 | 33.0 | 18.0 | | |
| | | (A1-2) | parts by mass | | | | | | 25.0 | 23.0 |
| | | (A1-3) | parts by mass | | | | 2.0 | 2.0 | | 2.0 |
| | 4-Methyl-1-pentene-based polymer (A4) | (A4-1) | parts by mass | | | | | | | |
| | ABS resin (A5) | (A5-1) | parts by mass | | | | | | | |
| | | Subtotal | | | 25.0 | 25.0 | 35.0 | 20.0 | 25.0 | 25.0 |

EP 4 368 675 A1

27

(continued)

Table 1 (continued)

| | | | Example 11 | Example 12 | Example 13 | Example 14 | Example 15 | Example 16 |
|---|---|---|---|---|---|---|---|---|
| Metal oxide (B) | Magnesium oxide (B-1) | parts by mass | 22.5 | | | | | |
| | Magnesium oxide (B-2) | parts by mass | 52.5 | 75.0 | 65.0 | 80.0 | 75.0 | 75.0 |
| | Magnesium oxide (B-3) | parts by mass | | | | | | |
| | Subtotal | | 75.0 | 75.0 | 65.0 | 80.0 | 75.0 | 75.0 |
| | (B-1)/(B-2) ratio | Mass ratio | 30/70 | 0/100 | 0/100 | 0/100 | 0/100 | 0/100 |
| Total | | parts by mass | 100 | 100 | 100 | 100 | 100 | 100 |
| Unmodified polyolefin-based wax (C) | (C-1) | parts by mass | 0.6 | 0.6 | 0.6 | 0.6 | 0.6 | 0.6 |
| Other components | Modified polyolefin-based wax | parts by mass | | | | | | |
| | (A2-3) glass fiber portion | parts by mass | | | | | | |
| | Carbon black | parts by mass | | | | | | |

EP 4 368 675 A1

| Table 1 (continued) | | | Example 11 | Example 12 | Example 13 | Example 14 | Example 15 | Example 16 |
|---|---|---|---|---|---|---|---|---|
| Mechanical properties | Specific gravity | g/cm3 | 2.13 | 2.05 | 1.80 | 2.22 | 2.08 | 2.07 |
| | MFR (230°C, 2.16 kgf) | g/10 min | 8.3 | 6.7 | 15.2 | 1.3 | 6.7 | 9.5 |
| | MFR (230°C, 5 kgf) | g/10 min | 25.9 | 22.2 | 49 | 5.4 | 24.4 | 33.9 |
| | Pencil hardness | | 5B | 5B | 3B | B | HB | F |
| Thermal properties | Thermal conductivity | W/ m•K | 2.82 | 2.78 | 1.51 | 2.89 | 3.06 | 2.84 |
| | Deflection temperature under load (1.8 MPa) | °C | 64.4 | 54.8 | 61.2 | 61.2 | 69.4 | 52.2 |
| Chemical properties | Water absorption rate | wt% | 0.01 | 0.01 | 0 | 0 | 0 | 0 |
| Antibacterial properties (water resistance category 0/light resistance category 0) | Antibacterial activity value (Escherichia coli) | - | | | | | | 6.1 |
| | Antibacterial activity value (Staphylococcus aureus) | - | | | | | | 4.2 |

EP 4 368 675 A1

Table 1 (continued)

| | | | | Example 17 | Example 18 | Example 19 | Example 20 | Example 21 | Example 22 |
|---|---|---|---|---|---|---|---|---|---|
| Thermoplastic resin (A) | Propylene-based polymer (A2) | (A2-1) | parts by mass | | | | | | |
| | | (A2-2) | parts by mass | | 28.0 | 28.0 | 28.0 | 23.0 | 14.0 |
| | | (A2-3) PP portion | parts by mass | | | | | | |
| | | (A2-4) | parts by mass | | | | | | 14.0 |
| | Ethylene-based polymer (A1) | (A1-1) | parts by mass | | | | | | |
| | | (A1-2) | parts by mass | 23.0 | | | | | |
| | | (A1-3) | parts by mass | 2.0 | 2.0 | 2.0 | 2.0 | 2.0 | 2.0 |
| | 4-Methyl-1-pentene-based polymer (A4) | (A4-1) | parts by mass | | | | | | |
| | ABS resin (A5) | (A5-1) | parts by mass | | | | | | |
| | | Subtotal | | 25.0 | 30.0 | 30.0 | 30.0 | 25.0 | 30.0 |

| | | | Example 17 | Example 18 | Example 19 | Example 20 | Example 21 | Example 22 |
|---|---|---|---|---|---|---|---|---|
| Metal oxide (B) | Magnesium oxide (B-1) | parts by mass | | | | | | |
| | Magnesium oxide (B-2) | parts by mass | 75.0 | | | | | 70.0 |
| | Magnesium oxide (B-3) | parts by mass | | 70.0 | 70.0 | 70.0 | 75.0 | |
| | Subtotal | | 75.0 | 70.0 | 70.0 | 70.0 | 75.0 | 70.0 |
| | (B-1)/(B-2) ratio | Mass ratio | 0/100 | 0/0 | 0/0 | 0/0 | 0/0 | 0/100 |
| Total | | parts by mass | 100 | 100 | 100 | 100 | 100 | 100 |
| Unmodified polyolefin-based wax (C) | (C-1) | parts by mass | 0.6 | 0.6 | 1.0 | 2.0 | 0.6 | 0.6 |
| Other components | Modified polyolefin-based wax | parts by mass | | | | | | |
| | (A2-3) glass fiber portion | parts by mass | | | | | | |
| | Carbon black | parts by mass | 1.0 | | | | | |

EP 4 368 675 A1

(continued)

| | | | Example 17 | Example 18 | Example 19 | Example 20 | Example 21 | Example 22 |
|---|---|---|---|---|---|---|---|---|
| Mechanical properties | Specific gravity | g/cm$^3$ | 2.10 | 1.87 | 1.86 | 1.86 | 2.00 | 1.91 |
| | MFR (230°C, 2.16 kgf) | g/10 min | 7.0 | 20.4 | 23.2 | 28.0 | 139.0 | 55.2 |
| | MFR (230°C, 5 kgf) | g/10 min | 23.6 | 67.8 | 87.8 | 98.8 | *1 | 228 |
| | Pencil hardness | | 2B | H | B | HB | H | H |
| Thermal properties | Thermal conductivity | W/m•K | 3.32 | 0.93 | 0.85 | 0.99 | 1.28 | 0.92 |
| | Deflection temperature under load (1.8 MPa) | °C | 66.3 | 69.1 | 47.6 | Too deflected to take | 81.9 | 54.8 |
| Chemical properties | Water absorption rate | wt% | 0 | 0 | 0 | 0 | 0 | 0 |
| Antibacterial properties (water resistance category 0/light resistance category 0) | Antibacterial activity value (Escherichia coli) | - | | | | | | |
| | Antibacterial activity value (Staphylococcus aureus) | - | | | | | | |

[Table 1-3]

| Table 1 (continued) | | | | | Example 23 | Example 24 | Example 25 | Example 26 | Example 27 | Example 28 | Example 29 |
|---|---|---|---|---|---|---|---|---|---|---|---|
| Thermoplastic resin (A) | Propylene-based polymer (A2) | (A2-1) | parts by mass | | | | | | | | |
| | | (A2-2) | parts by mass | | 19.1 | | | | | | |
| | | (A2-3) PP portion | parts by mass | | 7.6 | 9.4 | 11.5 | 11.5 | | | |
| | | (A2-4) | parts by mass | | | 11.8 | 14.4 | 14.4 | | | |
| | Ethylene-based polymer (A1) | (A1-1) | parts by mass | | | | | | | | |
| | | (A1-2) | parts by mass | | | | | | 33.0 | | |
| | | (A1-3) | parts by mass | | 2.0 | 2.0 | 2.1 | 2.1 | 2.0 | | |
| | 4- Methyl-1-pentene-based polymer (A4) | (A4-1) | parts by mass | | | | | | | 35.0 | 30.0 |
| | ABS resin (A5) | (A5-1) | parts by mass | | | | | | | | |
| | | Subtotal | | | 28.7 | 23.2 | 28.0 | 28.0 | 35.0 | 35.0 | 30.0 |

(continued)

**Table 1 (continued)**

| | | | Example 23 | Example 24 | Example 25 | Example 26 | Example 27 | Example 28 | Example 29 |
|---|---|---|---|---|---|---|---|---|---|
| Metal oxide (B) | Magnesium oxide (B-1) | parts by mass | | | | | | | |
| | Magnesium oxide (B-2) | parts by mass | 71.3 | 76.8 | 72.0 | 72.0 | 65.0 | 65.0 | 70.0 |
| | Magnesium oxide (B-3) | parts by mass | | | | | | | |
| | Subtotal | | 71.3 | 76.8 | 72.0 | 72.0 | 65.0 | 65.0 | 70.0 |
| | (B-1)/(B-2) ratio | Mass ratio | 0/100 | 0/100 | 0/100 | 0/100 | 0/100 | 0/100 | 0/100 |
| Total | | parts by mass | 100 | 100 | 100 | 100 | 100 | 100 | 100 |
| Unmodified polyolefin-based wax (C) | (C-1) | parts by mass | 0.6 | 0.6 | 0.6 | 1.0 | 0.6 | 0.6 | 0.6 |
| Other components | Modified polyolefin-based wax | parts by mass | | | | | | | |
| | (A2-3) glass fiber portion | parts by mass | 1.9 | 2.4 | 2.9 | 2.9 | | | |
| | Carbon black | parts by mass | | | | | | | |

| Table 1 (continued) | | | Example 23 | Example 24 | Example 25 | Example 26 | Example 27 | Example 28 | Example 29 |
|---|---|---|---|---|---|---|---|---|---|
| Mechanical properties | Specific gravity | g/cm$^3$ | 1.90 | 2.03 | 1.91 | 1.87 | 1.80 | 1.65 | 1.73 |
| | MFR (230°C, 2.16 kgf) | g/10 min | 21.9 | 21.4 | 41.4 | 36.5 | 15.2 | 10.7 | 9.7 |
| | MFR (230°C, 5 kgf) | g/10 min | 83.6 | 87.5 | 164 | 135 | 49 | 45.1 | 44.1 |
| | Pencil hardness | | 2H | 4H | 5H | 4H | 3B | <6B | <6B |
| Thermal properties | Thermal conductivity | W/m•K | 1.03 | 1.47 | 1.16 | 1.15 | 1.51 | 0.56 | 0.63 |
| | Deflection temperature under load (1.8 MPa) | °C | 92.9 | 104.8 | 112.4 | 57.2 | 61.2 | Too deflected to take | Too deflected to take |
| Chemical properties | Water absorption rate | wt% | 0.01 | 0.01 | 0.01 | 0.01 | 0 | 0.13 | 0.01 |
| Antibacterial properties (water resistance category 0/light resistance category 0) | Antibacterial activity value (Escherichia coli) | - | | | | | | | 2.1 |
| | Antibacterial activity value (Staphylococcus aureus) | - | | | | | | | 4.9 |

EP 4 368 675 A1

Table 1 (continued)

| | | | | Example 30 | Example 31 | Example 32 | Example 33 | Comparative Example 1 | Comparative Example 2 | Comparative Example 3 |
|---|---|---|---|---|---|---|---|---|---|---|
| Thermoplastic resin (A) | Propylene-based polymer (A2) | (A2-1) | parts by mass | | | | | | | |
| | | (A2-2) | parts by mass | | | | | 68.0 | 23.0 | 23.0 |
| | | (A2-3) PP portion | parts by mass | | | | | | | |
| | | (A2-4) | parts by mass | | | | | | | |
| | Ethylene-based polymer (A1) | (A1-1) | parts by mass | | | | | | | |
| | | (A1-2) | parts by mass | | | | | | | |
| | | (A1-3) | parts by mass | | | | | 2.0 | 2.0 | 2.0 |
| | 4-Methyl-1-pentene-based polymer (A4) | (A4-1) | parts by mass | 25.0 | | | | | | |
| | ABS resin (A5) | (A5-1) | parts by mass | | 35.0 | 30.0 | 25.0 | | | |
| | | Subtotal | | 25.0 | 35.0 | 30.0 | 25.0 | 70.0 | 25.0 | 25.0 |

36

| | | | Example 30 | Example 31 | Example 32 | Example 33 | Comparative Example 1 | Comparative Example 2 | Comparative Example 3 |
|---|---|---|---|---|---|---|---|---|---|
| Metal oxide (B) | Magnesium oxide (B-1) | parts by mass | | | | | | | |
| | Magnesium oxide (B-2) | parts by mass | 75.0 | 65.0 | 70.0 | 75.0 | 30.0 | 75.0 | 75.0 |
| | Magnesium oxide (B-3) | parts by mass | | | | | | | |
| | Subtotal | | 75.0 | 65.0 | 70.0 | 75.0 | 30.0 | 75.0 | 75.0 |
| | (B-1)/(B-2) ratio | Mass ratio | 0/100 | 0/100 | 0/100 | 0/100 | 0/100 | 0/100 | 0/100 |
| Total | | parts by mass | 100 | 100 | 100 | 100 | 100 | 100 | 100 |
| Unmodified polyolefin-based wax (C) | (C-1) | parts by mass | 0.6 | 0.6 | 0.6 | 0.6 | 0.6 | | |
| Other components | Modified polyolefin-based wax | parts by mass | | | | | | 0.6 | |
| | (A2-3) glass fiber portion | parts by mass | | | | | | | |
| | Carbon black | parts by mass | | | | | | | |

EP 4 368 675 A1

|  |  |  | Example 30 | Example 31 | Example 32 | Example 33 | Comparative Example 1 | Comparative Example 2 | Comparative Example 3 |
|---|---|---|---|---|---|---|---|---|---|
| Mechanical properties | Specific gravity | g/cm$^3$ | 1.93 | 1.91 | 2.03 | 2.11 | 1.16 | 1.99 | 2.00 |
| | MFR (230°C, 2.16 kgf) | g/10 min | 6.4 | 4.8 | 2.8 | 1.3 | 58.4 | 15.1 | 14.9 |
| | MFR (230°C, 5 kgf) | g/10 min | 39.9 | 13.7 | 11.3 | 5.4 | 232 | 59.1 | 62 |
| | Pencil hardness | | <6B | 2H | 4H | 6H | 3B | HB | 2H |
| Thermal properties | Thermal conductivity | W/ m•K | 0.77 | 0.84 | 0.74 | 1.13 | 0.32 | 1.43 | 1.25 |
| | Deflection temperature under load (1.8 MPa) | °C | Too deflected to take | 90.7 | 89 | 93.1 | Too deflected to take | 52.6 | 76.7 |
| Chemical properties | Water absorption rate | wt% | 0 | 0.02 | 0.13 | 1.13 | 0.01 | 0 | 0 |
| Antibacterial properties (water resistance category 0/light resistance category 0) | Antibacterial activity value (Escherichia coli) | - | | | | 6.0 | | | |
| | Antibacterial activity value (Staphylococcus aureus) | - | | | | 3.7 | | | |
| "*1" in Table 1 (Example 21) indicates that the thermoplastic resin composition flowed too much to be measured. | | | | | | | | | |

EP 4 368 675 A1

[Table 2]

Table 2

| Example 2 | Antibacterial activity value | |
|---|---|---|
| | Staphylococcus aureus | Escherichia coli |
| Water resistance category a/light resistance category 0 | 5.4 | 4.0 |
| Water resistance category 1 | 4.2 | 6.0 |
| Water resistance category 2 | 4.2 | 6.0 |
| Light resistance category 1 | 4.2 | 2.8 |
| Light resistance category 2 | 4.3 | 2.6 |

[Table 3]

Table 3

| | Common logarithm of viral infectivity titer | | | [Ut-At] |
|---|---|---|---|---|
| | Blank sample immediately after inoculation [U0] | Blank sample after 24 hours [Ut] | Example 2 after 24 hours [At] | Antiviral activity [Ut-At] |
| Water resistance category 1 | 5.63 | 4.31 | <0.80 | 3.5 |
| Water resistance category 2 | 5.53 | 4.39 | <0.80 | 3.5 |
| Light resistance category 1 | 5.7 | 4.4 | <0.80 | 3.5 |
| Light resistance category 2 | 5.7 | 4.29 | 1.5 | 2.7 |

**Claims**

1. A thermoplastic resin composition comprising 10 to 50 parts by mass of a thermoplastic resin (A), 50 to 90 parts by mass of a metal oxide (B), provided that a total amount of (A)+(B) is 100 parts by mass, and an unmodified polyolefin-based wax (C) in a range of 0.1 to 20 parts by mass per 100 parts by mass of the total amount of (A)+(B).

2. The thermoplastic resin composition according to claim 1, wherein the thermoplastic resin (A) is one or more selected from the group consisting of ethylene-based polymers, propylene-based polymers, 1-butene-based polymers, 4-methyl-1-pentene-based polymers, and ABS resins.

3. The thermoplastic resin composition according to claim 1, wherein the metal oxide (B) comprises magnesium oxide.

4. The thermoplastic resin composition according to claim 1, wherein an average particle size of the metal oxide (B) is in a range of 0.1 to 110 pm.

5. The thermoplastic resin composition according to claim 1, wherein a thermal conductivity of the metal oxide (B) is in a range of 10 to 300 W/mK.

6. The thermoplastic resin composition according to claim 1, wherein a thermal conductivity of the thermoplastic resin composition is in a range of 0.5 to 5 W/mK.

7. The thermoplastic resin composition according to claim 1, wherein a specific gravity of the thermoplastic resin composition is in a range of 1.0 to 5.0.

8. The thermoplastic resin composition according to claim 1, comprising 10 to 30 parts by mass of the thermoplastic resin (A) and 70 to 90 parts by mass of the metal oxide (B), provided that the total amount of (A)+(B) is 100 parts by mass.

9. The thermoplastic resin composition according to claim 1, wherein an antibacterial activity value after 24 hours is 2.0 or more in an antibacterial test performed using Escherichia coli in accordance with JIS Z 2801:2012 (film adhesion method) under conditions where no water or light resistance pretreatment is performed.

10. The thermoplastic resin composition according to claim 1, wherein an antibacterial activity value after 24 hours is 2.0 or more in an antibacterial test performed using Staphylococcus aureus in accordance with JIS Z 2801:2012 (film adhesion method) under conditions where no water or light resistance pretreatment is performed.

11. The thermoplastic resin composition according to claim 1, wherein an antiviral activity value is 2.0 or more in an antiviral test performed using Feline calicivirus conducted in accordance with ISO 21702:2019.

12. The thermoplastic resin composition according to claim 1, comprising a fibrous filler (D) in a range of 0.1 to 20 parts by mass per 100 parts by mass in total of the thermoplastic resin (A) and the metal oxide (B).

13. A molded article comprising the thermoplastic resin composition according to any one of claims 1 to 12.

14. A door handle, door knob, handrail or switch comprising the thermoplastic resin composition according to any one of claims 1 to 12.

15. A case comprising the thermoplastic resin composition according to any one of claims 1 to 12.

16. A fashion accessory comprising the thermoplastic resin composition according to any one of claims 1 to 12.

17. A container comprising the thermoplastic resin composition according to any one of claims 1 to 12.

18. Stationery comprising the thermoplastic resin composition according to any one of claims 1 to 12.

19. Tableware or alcoholic drink ware comprising the thermoplastic resin composition according to any one of claims 1 to 12.

20. A mouse or keyboard comprising the thermoplastic resin composition according to any one of claims 1 to 12.

## INTERNATIONAL SEARCH REPORT

| International application No. |
| --- |
| **PCT/JP2022/026977** |

**A. CLASSIFICATION OF SUBJECT MATTER**

*C08L 101/00*(2006.01)i; *C08K 3/22*(2006.01)i; *C08K 7/02*(2006.01)i; *C08L 23/00*(2006.01)i; *C08L 23/02*(2006.01)i
FI:   C08L101/00; C08K3/22; C08L23/02; C08L23/00; C08K7/02

According to International Patent Classification (IPC) or to both national classification and IPC

**B. FIELDS SEARCHED**

Minimum documentation searched (classification system followed by classification symbols)

C08K7/02; C08L23/00; C08L23/02; C08L101/00; C08K3/22

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 9-241390 A (OK KASEI KK) 16 September 1997 (1997-09-16) | 1-2, 4, 6-20 |
| | claims, paragraphs [0001], [0002], [0026]-[0034], examples, comparative examples | |
| Y | | 12 |
| A | | 3, 5 |
| X | JP 60-96622 A (DAINICHI SEIKA KOGYO KK) 30 May 1985 (1985-05-30) | 1-2, 4, 6-7, 9-11, 13-20 |
| | claims, p. 2, lower left column, lines 12-20, examples 3, 4, comparative examples 3, 4 | |
| Y | | 12 |
| A | | 3, 5, 8 |
| X | JP 9-137005 A (TOYO INK MFG CO LTD) 27 May 1997 (1997-05-27) | 1-2, 4, 6-11, 13, 17 |
| | claims, paragraph [0007], example 4 | |
| Y | | 12 |
| A | | 3, 5, 14-16, 18-20 |

☑ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **31 August 2022** | **13 September 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**EP 4 368 675 A1**

**INTERNATIONAL SEARCH REPORT**

| | International application No. |
|---|---|
| | **PCT/JP2022/026977** |

### C. DOCUMENTS CONSIDERED TO BE RELEVANT

| Category* | Citation of document, with indication, where appropriate, of the relevant passages | Relevant to claim No. |
|---|---|---|
| X | JP 9-137004 A (TOYO INK MFG CO LTD) 27 May 1997 (1997-05-27) claims, paragraph [0010], example 2 | 1-2, 4, 6-11, 13, 17 |
| Y | | 12 |
| A | | 3, 5, 14-16, 18-20 |
| X | JP 2000-143996 A (TOYO INK MFG CO LTD) 26 May 2000 (2000-05-26) example 5 | 1-2, 6-7, 9-11, 13 |
| A | | 3-5, 8, 12, 14-20 |
| X | JP 9-48870 A (SEKISUI CHEMICAL CO LTD) 18 February 1997 (1997-02-18) comparative examples 2, 4 | 1-3, 5-7, 9-11, 13 |
| A | | 4, 8, 12, 14-20 |
| A | JP 2018-145387 A (MITSUI CHEMICALS INC) 20 September 2018 (2018-09-20) entire text | 1-20 |
| A | JP 2013-209539 A (TOYO INK SC HOLDINGS CO LTD) 10 October 2013 (2013-10-10) entire text | 1-20 |

Form PCT/ISA/210 (second sheet) (January 2015)

42

INTERNATIONAL SEARCH REPORT
Information on patent family members

International application No.

**PCT/JP2022/026977**

| Patent document cited in search report | | | Publication date (day/month/year) | Patent family member(s) | | | Publication date (day/month/year) |
|---|---|---|---|---|---|---|---|
| JP | 9-241390 | A | 16 September 1997 | (Family: none) | | | |
| JP | 60-96622 | A | 30 May 1985 | (Family: none) | | | |
| JP | 9-137005 | A | 27 May 1997 | (Family: none) | | | |
| JP | 9-137004 | A | 27 May 1997 | (Family: none) | | | |
| JP | 2000-143996 | A | 26 May 2000 | (Family: none) | | | |
| JP | 9-48870 | A | 18 February 1997 | (Family: none) | | | |
| JP | 2018-145387 | A | 20 September 2018 | US<br>claims, examples<br>WO<br>EP<br>CN | 2021/0253926<br><br>2017/209215<br>3467048<br>109196057 | A1<br><br>A1<br>A1<br>A | |
| JP | 2013-209539 | A | 10 October 2013 | (Family: none) | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S52197715542 A

- WO 2017209215 A

**Non-patent literature cited in the description**

- Society of International sustaining growth for Antimicrobial Articles, Test Methods, Sustainability Test Methods. Water Resistance Test. Society of International sustaining growth for Antimicrobial Articles, 2020

- Sustainability Test Methods. Test Methods. 2020